# EUROPEAN PATENT APPLICATION

(11) **EP 4 700 333 A1**
(43) Date of publication of application: **25.02.2026**
(21) Application number: 25195452.5
(22) Date of filing: 12.08.2025
(51) Int. Cl.: G01D 5/14, G01B 7/00

(54) **MAGNETIC SENSOR SYSTEM, METHOD AND ASSEMBLY**

(30) Priority: 21.08.2024 EP 24195718
(71) Applicant: Melexis Technologies SA, 2022 Bevaix (CH)
(72) Inventor: Yoshiya, Takumi, Yokohama, 231-0005 (JP); Chen, Pingyu, Yokohama, 231-0005 (JP)
(74) Representative: Jacobs, Lambert

(57) **Abstract**

A sensor system (100) comprising: a magnetic source with a through-opening; a magnetic sensor located at a fixed position relative to the magnetic source; an object capable of influencing a magnetic field generated by the magnetic source, the object being movable relative to the magnetic source and being located completely outside of the through-opening; a processing circuit configured for providing a signal indicative of a presence, a position or an orientation of the movable object, or a value derived therefrom; wherein a smallest distance (sd1) between the movable object and the magnetic source is smaller than a smallest distance (sd2) between the movable object and the magnetic sensor, or wherein the magnetic source is located between the magnetic sensor and the movable object. A method (1700) of determining a position of a movable object. A sensor module (140; 141). A sensor device (1820; 1920). A sensor assembly.

## Description

### Field of the invention

The present invention relates in general to the field of magnetic sensors, and more in particular to a system, a module, and a method of determining a position or an orientation of an object that is movable relative to a magnetic source and a magnetic sensor device.

### Background of the invention

Many magnetic sensor systems, modules and devices are known in the art.

Magnetic sensors are used for example in linear position sensor devices, angular position sensor devices, presence detectors, proximity detectors, etc.

It is well known that a horizontal Hall element is sensitive to a magnetic field oriented perpendicular to a semiconductor substrate, whereas vertical Hall elements and magneto-resistive (MR) elements (e.g. GMR, XMR, AMR, TMR) are sensitive to a magnetic field parallel to a semiconductor substrate.

It is also known that a magnetic sensor structure comprising e.g. a disk shaped integrated magnetic flux concentrator (IMC) and two or four horizontal Hall elements located near a periphery of this IMC disk, can be used to measure one or two in-plane magnetic field components (e.g. a Bx component and/or a By component, parallel to a substrate), and an out-of-plane component (e.g. Bz component perpendicular to the substrate).

Many variants of magnetic sensor structures and devices and systems exist, addressing one or more of the following requirements: using a simple or cheap magnetic structure, using a simple or cheap sensor device, being able to measure over a relatively large measurement range, being able to measure with great accuracy, requiring only simple arithmetic, being able to measure at high speed, being highly robust against positioning errors, being highly robust against an external disturbance field, providing redundancy, being able to detect an error, being able to detect and correct an error, having a good signal-to-noise ratio (SNR), etc. Often two or more of these requirements conflict with each other, hence a trade-off needs to be made.

Different types of position sensor systems are available.

In a first type of systems the sensor device is movable relative to the magnetic source, or vice versa. In many of these systems, a position or orientation of a permanent magnet mounted to a movable object is to be determined.

In a second type of systems, the sensor device has a fixed position relative to the magnetic source, but the system furthermore comprises a movable object for influencing the magnetic flux lines, and the position or orientation of this movable object is to be determined. The present invention belongs in this second type of systems.

There is always room for improvements or alternatives.

### Summary of the invention

It is an object of embodiments of the present invention, to provide a system, a module and a method of determining a position or an orientation of an object that is movable relative to a magnetic source and a magnetic sensor device.

It is an object of embodiments of the present invention to provide such a system, module or method, using a relatively simple magnetic source.

It is an object of embodiments of the present invention to provide such a system, module or method, with a reduced risk of mechanically damaging the sensor device.

It is an object of embodiments of the present invention to provide such a system, module or method, for determining one or more of the following: e.g. an axial distance, an axial displacement, an axial movement, a lateral distance, a lateral displacement, a lateral movement, a rotation angle, a rotation direction, a linear or an angular speed, a direction of movement, an acceleration, of the movable object.

It is an object of embodiments of the present invention to provide such a system, module or method, wherein the signal or value is determined in one or more of the following manners: requiring only simple arithmetic, requiring only a low number of magnetic sensors, wherein the mounting requirements of the sensor device relative to the magnetic source is relaxed, wherein the signal or value has a reduced sensitivity to temperature variations and/or to ageing effects and/or to an external magnetic disturbance field.

It is an object of embodiments of the present invention to provide a module that is highly compact, robust, and convenient to use.

It is an object of embodiments of the present invention to provide a module that can be easily arranged in the vicinity of a movable object for measuring movements thereof.

These and other objectives are accomplished by systems, modules and methods according to embodiments of the present invention.

According to a first aspect, the present invention provides a sensor system (e.g. a position sensor system, e.g. a linear position sensor system or an angular position sensor system), comprising: a magnetic source having at least one through-opening (e.g. a magnetic source having a ring shape with a through-opening, or a magnetic source comprising a plurality of at least two discrete magnets which are spaced apart from each other so as to form at least one through-opening between them); a (or at least one) magnetic sensor located at a fixed (e.g. predefined) position and/or a fixed orientation relative to the magnetic source, and configured for providing a sensor signal; an object (also referred to as "target") capable of influencing a magnetic field generated by the magnetic source, the object being movable relative to the magnetic source and being located completely outside of the at least one through-opening; a processing circuit configured for providing a signal indicative of presence of the movable object, and/or indicative of a position of the movable object, and/or indicative of an orientation of the movable object, or a value derived from said position or orientation (such as e.g. an axial distance, an axial displacement, an axial movement, a lateral distance, a lateral displacement, a lateral movement, a rotation angle, a rotation direction, a linear or an angular speed, a direction of movement, an acceleration); wherein a smallest distance (e.g. sd1) between the movable object and the magnetic source is smaller than a smallest distance (e.g. sd2) between the movable object and the magnetic sensor, or wherein the magnetic sensor is situated inside said opening, or wherein the magnetic source is located between the magnetic sensor and the movable object, or both.

In an embodiment, the processing circuit is configured to provide a linear position along a central axis of the magnetic source (also referred to herein as the Z-axis). In this case, the sensor system is a "linear position sensor system".

The sensor system may further comprise a semiconductor substrate, and the magnetic sensor may be mounted on, or embedded in said semiconductor substrate.

The sensor signal may be indicative of at least one characteristic of the magnetic field, e.g. of a magnetic field strength, or a magnetic field component (Bz) oriented in a predefined direction.

The processing circuit may be incorporated in the same semiconductor die that comprises the magnetic sensor, or on another semiconductor die but integrated in a same packaged device ("chip"), or may be located in another packaged device ("chip"), e.g. implemented in an external processor (e.g. an ECU), communicatively connected to the semiconductor substrate that contains the magnetic sensor.

In an embodiment, the movable object (or target) is made from, or comprises a soft-magnetic material.

In an embodiment, the movable object (or target) is made from, or comprises a hard-magnetic material.

In an embodiment, the movable object (or target) is made from, or comprises a permanent magnet.

In an embodiment, a virtual line interconnecting the movable object (or target) and the semiconductor substrate passes through the magnetic source.

In an embodiment, the semiconductor substrate further comprises a biasing and readout circuit. The readout circuit preferably comprises at least one amplifier, and optionally also an analog-to-digital convertor (ADC).

The semiconductor substrate may be a CMOS substrate.

The semiconductor substrate may be incorporated in a sensor device.

The sensor device may be a packaged semiconductor device (also known as "chip") comprising said magnetic sensor and/or said semiconductor substrate and a plastic or a ceramic moulding compound. The sensor device may also comprise a lead frame.

In preferred embodiments, the sensor system comprises only a single magnet with a through opening, e.g. a single ring magnet. The ring magnet may have a central axis. The ring magnet may have a square or a rectangular cross-section in a plane containing said central axis, but other cross-sections can also be used.

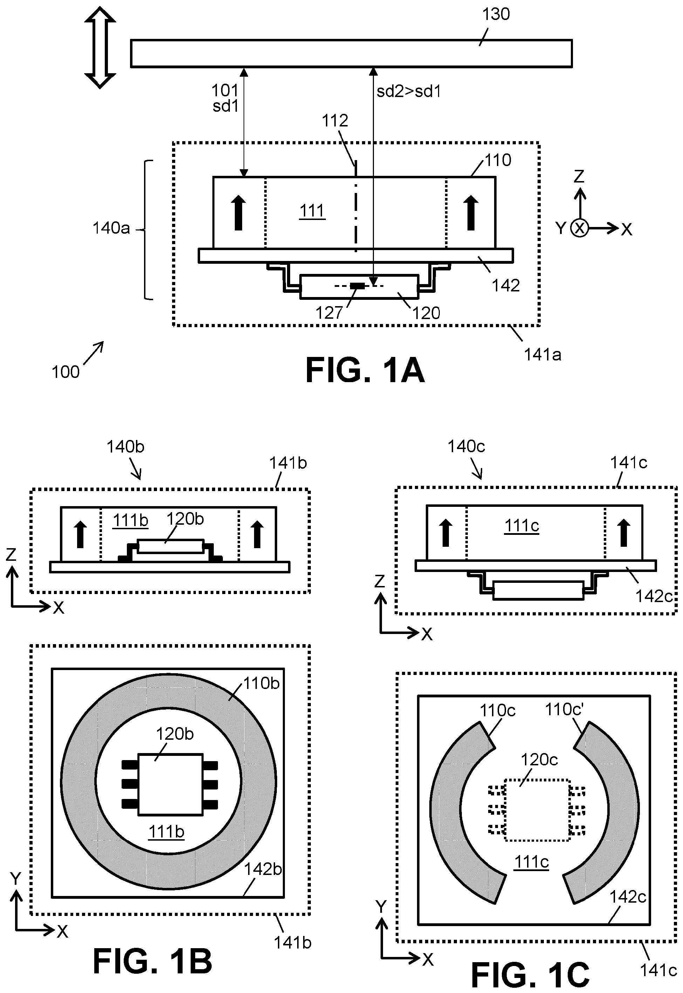

The magnetic source may comprise a plurality of individual magnets spaced by an opening a gap or an open space (see e.g. FIG. 1C to FIG. 1E).

The space inside the opening may be partially or completely filled with one or more non-magnetic material(s), such as e.g. air, or gas, or a plastic material, or Aluminum, etc.

In some embodiments, the magnetic sensor and/or the semiconductor substrate is located completely outside of the opening or gap (see e.g. FIG. 1A, FIG. 6 to FIG. 9, FIG. 14, FIG. 18).

In some embodiments, the magnetic sensor and/or semiconductor substrate is located at least partially inside said opening or gap (see e.g. FIG. 1B, FIG. 1D, FIG. 10 to FIG. 13, FIG. 15, FIG. 19).

In an embodiment, the processing circuit is configured for providing a so called "linear-position value", e.g. a value obtained after amplification and/or digitization of the sensor signal, but without a comparison with a predefined threshold value.

In an embodiment, the processing circuit is configured for providing a so called "binary value" or an "ON/OFF value", e.g. a value obtained after amplification and/or digitization of the sensor signal, and after a comparison with a predefined threshold value.

In an embodiment, the magnetic source and the movable object and the magnetic sensor are located substantially on a straight line (within a tolerance margin of ± 5 mm).

The movable object is preferably made of a soft magnetic material, such as e.g. Si-steel, soft iron, Fe-Si alloy (iron-silicon alloy), Fe-Ni alloy (ferrous nickel alloy), low carbon steel.

The magnetic source is preferably made of ferrite or SmCo (Samarium Cobalt) or NdFeB (Neodymium -iron-Boron), or any other suitable material.

In an embodiment, the magnetic source is a ring magnet.

In an embodiment, the magnetic source comprises a plurality of at least two discrete magnets (e.g. circular magnet segments or bar segments) which are spaced apart from each other, optionally with a gap or an opening between them, e.g. as illustrated in FIG. 1C to FIG. 1E.

In an embodiment, the magnetic sensor is embedded in a semiconductor substrate, and the semiconductor substrate is fixedly and unmovably connected (directly or indirectly) to the magnetic source.

In an embodiment, the magnetic source is a single object having a shape (e.g. a ring) and generates a field which is circle symmetric.

In an embodiment, the magnetic source comprises multiple objects, and generates a field having a rotational symmetry of 180° or 120° or 90° or 72° or 60°. (the term "rotational symmetry is explained e.g. in https://en.wikipedia.org/wiki/Rotational_symmetry)

With "fixedly and unmovably connected" is meant that the magnetic sensor cannot translate and cannot rotate relative to the magnetic source.

In an embodiment, the magnetic sensor is embedded in a semiconductor substrate, which is overmoulded by a plastic or ceramic moulding compound, typically referred to as "semiconductor chip", and this chip is mounted to a bottom side of a printed circuit board, and the magnetic source is mounted to a top side of this printed circuit board (e.g. as illustrated in FIG. 1A). It is an advantage of this embodiment (e.g. as compared to an embodiment where the magnetic source is directly mounted on top of the semiconductor package, that it reduces stress exerted upon the package and thus on the magnetic sensor caused by an attractive force between the external object and the magnetic source.

In an embodiment, the magnetic source is mounted on a first side (e.g. top side) of a carrier and the magnet sensor is mounted on a second side (e.g. bottom side) of the carrier (142), opposite the first side, preferably the carrier being a lead frame or a printed circuit board.

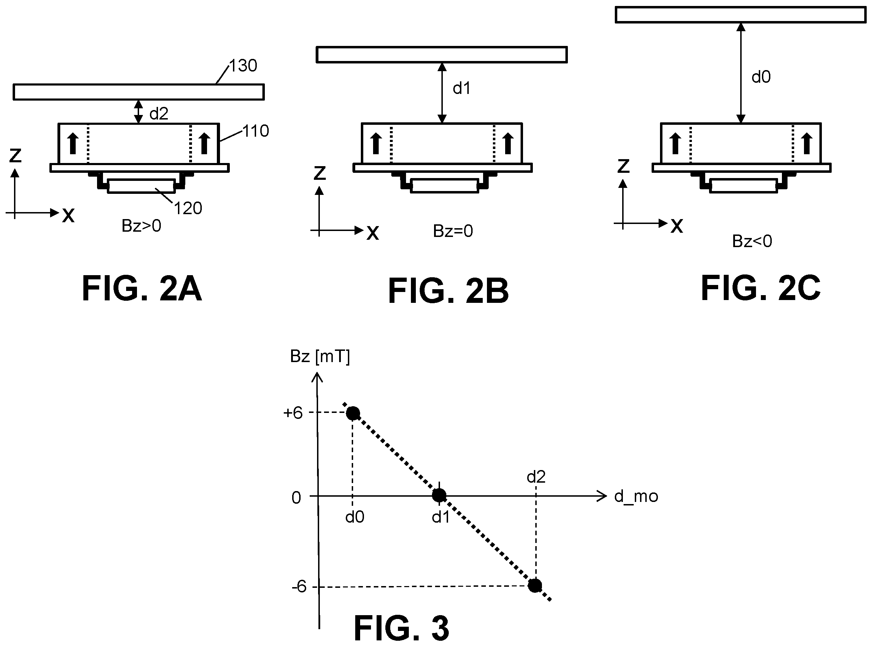

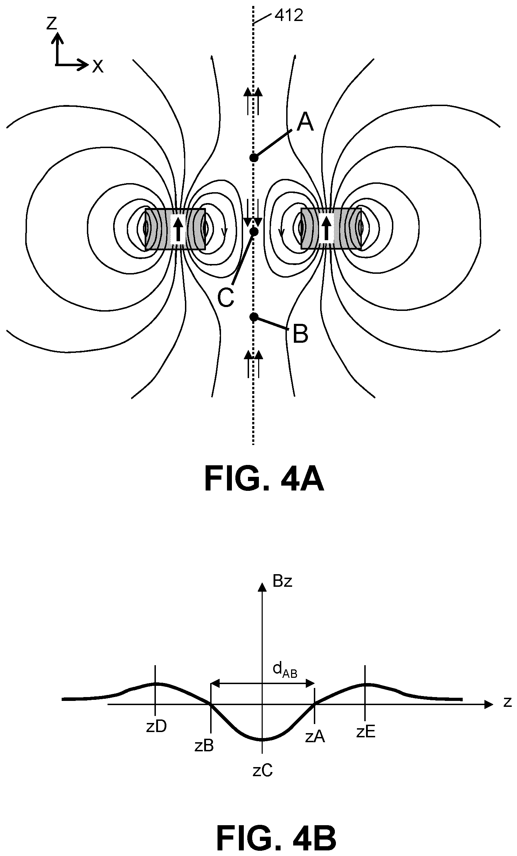

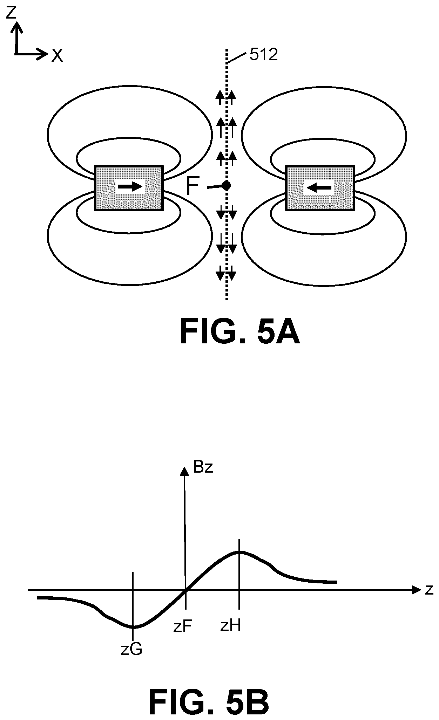

In an embodiment, the magnetic sensor element is situated at a predefined axial position (see e.g. FIG. 4A: zB, zA; FIG. 5A: zF) at which the magnetic field generated by the magnetic source is substantially equal to zero in absence of the movable object and/or at a predefined spatial configuration of the movable object. (see e.g. FIG. 2B, where the zero-Gauss position corresponds to a position between a tooth peak and a tooth minimum, such that a change of the sign of the sensor signal can be used to detect a tooth or passage of a tooth, or the like.

In an embodiment, the processing circuit is configured to detect a change of a sign of the sensor signal provided by the magnetic sensor.

In an embodiment, the magnetic source is a ring magnet with a central axis, and with a circular cross section in a plane perpendicular to that central axis, e.g. as illustrated in FIG. 1B.

In an embodiment, the magnetic source has a three dimensional shape which is circle symmetric around an axis, or is rotation symmetric around said axis (e.g. with periodicity of 3, or 4, or 5, or 6, or more than 6).

In an embodiment, the magnetic source comprises a ring magnet or a donut shaped magnet or a torus shaped magnet.

In an embodiment, the magnetic source is a ring magnet with an outer diameter (OD) in the range from 5.0 to 20.0 mm, or from 5.0 mm to 15.0 mm, or from 5.0 mm to 10.0 mm. The ring magnet may have an inner diameter (ID) of at least 1.0 mm or at least 2.0 mm. The ring magnet may have a height (H) in the range from 5.0 to 20.0 mm, or from 5.0 to 15.0 mm, or from 5.0 to 10.0 mm.

In an embodiment, the magnetic source is a ring magnet with an outer diameter (OD) in the range from 5 to 12 mm, and an inner diameter (ID) in the range from 20% to 50% of the outer diameter (OD), and a height (H) of at least 30% of the outer diameter (OD).

In an embodiment, the magnetic source consists or contains a plurality of at least two discrete magnets, spaced apart over a predefined distance. Such a magnetic source may for example contain a first and a second elongated bar magnet, both bar magnets being magnetised in a direction Z and being spaced apart in a direction X perpendicular to Z, (e.g. as illustrated in FIG. 1C to FIG. 1E).

In an embodiment, the magnetic source is axially magnetized or radially magnetized.

In an embodiment, the ring magnet is axially magnetized so as to create a magnetic field along the central axis (see e.g. FIG. 4A and FIG. 4B) with a first zone where Bz is positive, a second zone where Bz is negative, and a third zone where Bz is positive; or with a first zone where Bz is negative, a second zone where Bz is positive, and a third zone where Bz is negative. In both cases the second zone is located between the first zone and the third zone. Or stated in other words, the magnetic field strength along the central axis has two zero-crossings. The locations of these zero-crossings in the absence of the movable object, are referred to herein as zA and zB. It will be assumed that zA is proximal to the movable object, and zB is distal from the movable object.

In an embodiment, the at least one sensor element (e.g. horizontal Hall element) is located at a position along the central axis between zA and zB.

In an embodiment, the at least one sensor element is located at a position along the central axis between the centre C of the magnet and zA, or between the centre C of the magnet and zB.

In an embodiment, the locations zA and zB are spaced apart by a distance "dAB", and the at least one sensor element is located at a position along the central axis, at a distance of at most (dAB/4) or at most (dAB/8) from zA or from zB, preferably on the line segment between zB and zA (see FIG. 4B).

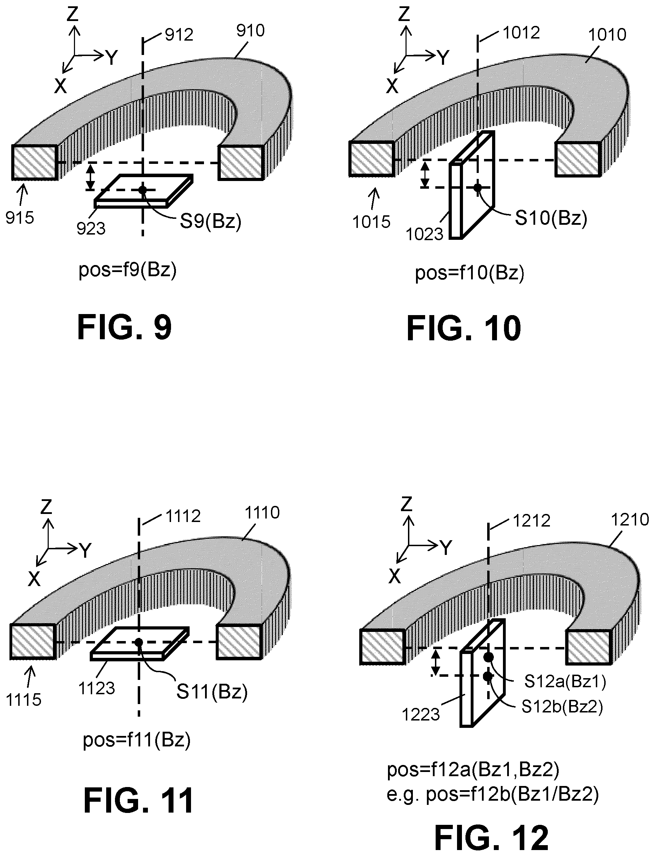

In an embodiment, the magnetic source has a shape with an axis (e.g. Z) (e.g. a central axis or a symmetry axis); and the magnetic sensor is configured for measuring at least one or only one magnetic field component (e.g. Bz) oriented parallel to the axis (Z). Examples of this embodiment are shown in FIG. 9, FIG. 10 and FIG. 11.

In an embodiment, the sensor system comprises a plurality of magnetic sensors configured for measuring at least two magnetic field components (e.g. Bz1, Bz2) oriented parallel to the axis, at two different locations along said axis (e.g. Z).

The plurality of magnetic sensors have a fixed position relative to the magnet. They may be embedded in said semiconductor substrate, or may be mounted to said semiconductor substrate. An example of this embodiment is shown in FIG. 12. The signal provided by the semiconductor substrate may be based on a linear combination, e.g. a sum or a difference between the two magnetic field components.

In an embodiment, the sensor system comprises a plurality of magnetic sensors configured for measuring at least two magnetic field components (e.g. Bu1, Bv1) oriented in two different directions (e.g. U forming an angle of about 45°, and V forming an angle of about 135° with respect to the axis), at a single sensor location.

The plurality of magnetic sensors have a fixed position relative to the magnet. They may be embedded in said semiconductor substrate, or may be mounted to said semiconductor substrate.

In an embodiment, the sensor system comprises a plurality of magnetic sensors configured for measuring a first magnetic field component (e.g. Bu1) oriented in a first direction (U) at a first sensor location, and for measuring a second magnetic field component (Bv1) oriented in a second direction (e.g. V) at a second sensor location different from the first sensor location.

The plurality of magnetic sensors have a fixed position relative to the magnet. They may be embedded in said semiconductor substrate, or may be mounted to said semiconductor substrate.

The V-direction may be orthogonal to the U-direction. The U direction may form an angle in the range from 30° to 60° with respect to the Z-axis. Alternatively, the U-direction may form an angle in the range from -15° to +15° with respect to the Z-axis.

The signal provided by the semiconductor substrate may be based on a linear combination, e.g. a sum or a difference between the two magnetic field components (Bu1, Bv1), or based on a ratio of these signals. It is noted that this is not a gradient signal, but this combined signal may be a good indication of the "turning" of the field lines caused by the movement of the movable object.

In an embodiment, the sensor system comprises a plurality of magnetic sensors configured for measuring a first radial (e.g. Br1) and a first axial component (e.g. Bz1) at a first sensor location, and optionally also for measuring a second radial (e.g. Br2) and a second axial component (e.g. Bz2) at a second sensor location, the first sensor location, and if present also the second sensor location being offset from the central axis (e.g. at a radial distance larger than 0.15 mm).

The plurality of magnetic sensors have a fixed position relative to the magnet. They may be embedded in said semiconductor substrate, or may be mounted to said semiconductor substrate.

The second sensor location, if present, may be spaced from the first sensor location in the axial direction (e.g. by at least 0.50 mm).

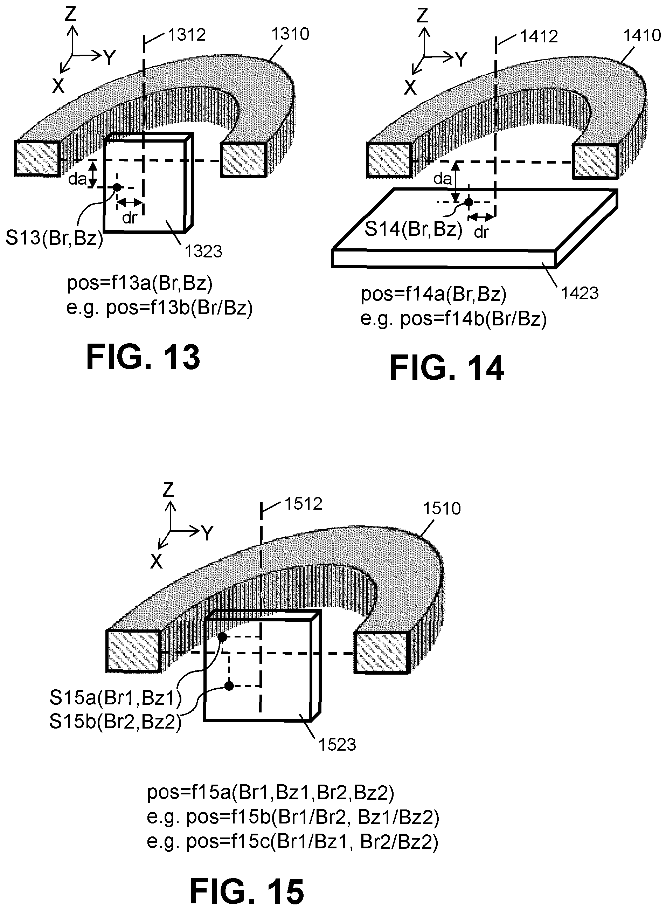

Examples of this embodiment are shown in FIG. 13 to FIG. 15.

The sensor device may be configured for determining a first angle based on the signals Br1 and Bz1, e.g. based on an arctangent of a ratio of these signals. This combined signal may be a good indication of the "turning" of the field lines caused by the movement of the movable object.

Optionally, the sensor device may be further configured for determining a second angle based on the signals Br2 and Bz2, e.g. based on an arctangent of a ratio of these signals.

The sensor device may be configured for providing a signal derived from one or both of these angles, e.g. based on a look-up table using one of these angles as an input, or using a linear combination of both of these angles as an input.

In an embodiment, the magnetic source comprises a central axis (e.g. Z), and the magnetic sensor is mounted to, or embedded in a semiconductor substrate (e.g. semiconductor die) that is oriented perpendicular to the central axis (e.g. Z).

Examples of this embodiment are shown in FIG. 9, FIG. 11, FIG. 14, FIG. 18, FIG. 19.

The semiconductor substrate may be configured for measuring at least one magnetic field component Bz oriented in the direction of the central axis.

The magnetic sensor element may comprise a Hall plate, e.g. a silicon Hall plate, e.g. a horizontal Hall element.

In an embodiment, the magnetic source comprises a central axis (e.g. Z), and the magnetic sensor is mounted to, or embedded in a semiconductor substrate (e.g. semiconductor die) that is oriented parallel to the central axis (e.g. Z).

Examples of this embodiment are shown in FIG. 10, FIG. 12, FIG. 13, FIG. 15.

The semiconductor substrate may comprise at least one magnetic sensor element (e.g. a vertical Hall element or an MR element) having an axis of maximum sensitivity parallel to said axis (Z), thus parallel to the semiconductor substrate.

The magnetic sensor element may comprise at least one vertical Hall element, or a magneto-resistive (MR) element, (e.g. TMR, XMR, AMR, GMR).

In an embodiment, the magnetic sensor element is situated at a predefined axial position (e.g. zB, zA of FIG. 4A & FIG. 4B; or e.g. zF of FIG. 5A & FIG. 5B) at which the magnetic field generated by the magnetic source is substantially equal to zero (e.g. having an absolute value smaller than 1 mT, or having an absolute value smaller than 0.5 mT, or having an absolute value smaller than 0.2 mT).

In an embodiment, the at least one magnetic sensor (e.g. one, or all magnetic sensors) is/are situated inside said at least one through-opening.

In an embodiment, the at least one magnetic sensor (e.g. one, or all magnetic sensors) is/are situated outside of said at least one through-opening.

In an embodiment, the at least one magnetic sensor (e.g. one, or all magnetic sensors) is/are embedded in a semiconductor substrate that is situated completely inside said at least one through-opening, or that is situated completely outside of said at least one through-opening, or that is situated partially inside and partially outside said at least one through-opening.

In an embodiment, the movable object (or movable target) is or comprises a soft magnetic material.

In an embodiment, the movable object (or movable target) is or comprises a hard magnetic material.

In an embodiment, the movable object (or movable target) is a permanent magnet, or comprises a magnetic material.

In an embodiment, the movable object (130) has a disk shape, optionally with a plurality of protrusions or openings or holes or cavities.

In an embodiment, the magnetic source has a central axis (Z); and the object is movable towards and away from the magnetic source along an axial direction (e.g. Z) of the magnetic source; in this case, the signal provided by the sensor device may be indicative of the distance (e.g. axial distance) between the movable object and the magnetic source.

In an embodiment, the magnetic source has a central axis (Z); and the object is movable in a lateral direction (e.g. a radial direction; e.g. in a plane perpendicular to the central axis) of the magnetic source; in this case, the signal provided by the sensor device may be indicative of the distance (e.g. radial distance) between the movable object and the axis of the magnetic source.

In an embodiment, the magnetic source has a central axis (Z); and the object is a wheel, (e.g. a gear wheel) mounted at a fixed position relative to the magnetic source, and rotatable about a rotation axis. The rotation axis may be perpendicular to the central axis of the magnetic source, or may be parallel to the central axis of the magnetic source.

In an embodiment, the object is a plate shaped object.

In an embodiment, the wheel has a plurality of teeth and/or recesses, and the rotation axis may be perpendicular to a central axis of the magnetic source; in this case, the signal provided by the sensor device may be indicative of a rotation angle of the wheel, and/or indicative of a position of a tooth or a protrusion.

In an embodiment, the wheel has a plurality of protruding portions and/or openings or cavities, and the rotation axis may be parallel to a central axis of the magnetic source; in this case, the signal provided by the sensor device may be indicative of a rotation angle of the wheel, and/or indicative of a position of said protruding portions and/or openings or cavities.

In an embodiment the object is movable from a first position to a second position in a predefined range. In certain embodiments, the sensor device is arranged relative to the magnetic source such that a sign of at least one measured signal changes (e.g. from negative to positive, or vice versa) when moving from the first to the second position. This may be highly advantageous in applications where safety is important, such as e.g. in automotive, industrial or robotic applications.

According to a second aspect, the present invention also provides a method of determining a (e.g. linear or angular) position or orientation of a movable object (also referred to as "movable target") that is capable of influencing a magnetic field, or a value derived from said position or orientation (such as e.g. a linear or angular speed), the method comprising the steps of: a) providing a magnetic source for generating a magnetic field, the magnetic source having at least one through-opening, and arranging the magnetic source such that the movable object is located completely outside of said at least one through-opening, or arranging the magnetic source between a magnetic sensor device and the movable object; b) measuring at least one magnetic field characteristic (e.g. Bz; Br,Bz) using at least one magnetic sensor located in at least one fixed (e.g. predefined) position relative to the magnetic source; c) determining a presence and/or a position and/or an orientation of the movable object, (e.g. a linear position along the central axis of the magnetic source, or an angular position about a rotation axis which is oriented perpendicular to the central axis of the magnetic source) or a value derived therefrom (e.g. a linear or an angular speed, a linear or angular acceleration) based on at least one sensor signal obtained from the at least one magnetic sensor; wherein step b) comprises: measuring said at least one magnetic field characteristic at a location inside said at least one through-opening, or at a sensor location at a distance (e.g. a smallest distance sd2) from the movable object larger than a distance (e.g. a smallest distance sd1) between the movable object and the magnetic source, e.g. at a location beyond or behind the magnetic source as seen from the movable object.

Step c) may comprise: using a look-up table, optionally with interpolation, to determine said position. This look-up table may be generated by simulation or during a calibration procedure, and may be stored in a non-volatile memory. The non-volatile memory may be incorporated in the same semiconductor substrate that contains the magnetic sensor, or may be implemented on another semiconductor substrate but electrically connected thereto, and incorporated in a same packaged semiconductor device ("chip").

The sensor position may be chosen such that at least one sensor signal changes sign when the object moves from a first position to a second position.

In an embodiment, step c) comprises: comparing the sensor signal with a predefined threshold value, and providing a result of the comparison. This signal may be referred to as an "ON-OFF signal" or binary signal.

In an embodiment, step c) comprises: amplifying the sensor signal, and providing the amplified sensor signal. This signal may be an analog signal.

In an embodiment, step c) comprises: amplifying the sensor signal, and digitizing the amplified sensor signal. This signal may be referred to as a "digital signal".

In an embodiment, step c) comprises: amplifying the sensor signal, and digitizing the amplified sensor signal, and linearizing the digitized signal, e.g. using a piecewise linear approximation function, or using a look-up table with interpolation, or using mathematical formulas. This signal may be referred to as a "linearized signal".

In an embodiment, the semiconductor substrate further comprises a temperature sensor, and the method further comprises the step of measuring a temperature of the sensor element, and compensating the sensor signal for temperature variations of the sensor element.

In an embodiment, the method further comprises the step of estimating a temperature of the magnetic source, and compensating the position or orientation or speed for temperature variations of the magnetic source, for example by multiplying the position with a linear function of the estimated temperature, e.g. in accordance with the formula: position = (K1+K2*Tm)*Bz, where K1 and K2 are predefined constants, Tm is the temperature of the magnetic source, and Bz is the measured magnetic field component oriented in the Z-direction.

In an embodiment, step a) comprises mounting the magnetic source on a first side of a carrier and mounting the magnetic sensor on a second side of the carrier, opposite the first side.

In an embodiment, step b) comprises measuring said at least one magnetic field characteristic at a predefined axial position (see e.g. FIG. 4A: zB, zA; or FIG. 5A: zF) at which the magnetic field generated by the magnetic source is substantially equal to zero in absence of the movable object and/or at a predefined spatial configuration of the movable object (see e.g. FIG. 6, where the "zero-Gauss position" corresponds to a position at which the sensor signal changes sign between a "tooth minimum" and a "tooth maximum").

According to a third aspect, the present invention also provides a sensor device comprising: a lead frame; a magnetic source (e.g. a ring magnet) mounted to said lead frame, the magnetic source having a central axis and at least one through- opening; at least one magnetic sensor (e.g. embedded in, or mounted to a semiconductor die) configured for measuring a characteristic of the magnetic field generated by the magnetic source; a processing circuit (e.g. implemented on the same semiconductor die, or on a second semiconductor die) configured for providing a signal that is indicative of a presence or a position or an orientation of an object (or "target"), external to the sensor device when present in the vicinity of the magnet, or a signal derived from said position or orientation (such as a speed, a velocity or an acceleration), based on at least one signal provided by the at least one magnetic sensor, optionally using a look-up table.

The external object may comprise a magnetic or soft-magnetic or a hard-magnetic material.

The semiconductor die may be electrically connected to leads of the lead frame by means of bond wires. The sensor device may further comprise a plastic or ceramic moulding compound, at least partially surrounding said magnetic source and said semiconductor substrate.

The processing circuit may comprise a non-volatile memory comprising data or parameters (e.g. a look-up table, or coefficients of a polynomial, or the like) for converting the sensor signal obtained from the at least one magnetic sensor into a position of the object. The data or parameters may be determined by simulation or by a calibration procedure.

In an embodiment, the at least one magnetic sensor element is embedded in a semiconductor substrate, and the sensor device further comprises a moulding compound that completely surrounds the semiconductor substrate and the magnetic source.

Preferably the lead frame has a plurality of elongated leads that extend from the moulding compound.

In an embodiment, the processing circuit is further configured for providing a signal indicative of a (linear) distance between the external object and the magnetic source.

In an embodiment, the magnetic sensor element is situated on the central axis of the magnet, and in close vicinity of, e.g. within at most 1.0 mm, of a predefined axial position (zB, zA; zF) at which the magnetic field generated by the magnetic source is substantially equal to zero, in the absence of the external object. In an example, the magnetic source is a radially magnetized ring magnet and the magnetic sensor element is situated substantially at the geometric centre of the magnet. In another example, the magnetic source is an axially magnetized ring magnet, and the magnetic sensor element is situated on the central axis of the ring magnet, e.g. in brief vicinity of a bottom surface of the ring magnet, or slightly inside or slightly outside of the ring body. The exact "zero-Gauss"-position may depend on the inner radius, outer radius and the height of the ring magnet. This position can be found by simulation and/or by performing measurements.

It is an advantage that the magnetic field measured at this position is approximately zero, and is highly insensitive to temperature variations of the magnet, and/or demagnetization, or stated in other words, is robust against ageing effects. It is also an advantage that such a device is easily capable of detecting whether the external object is present (within a predefined distant to the sensor device), or not, without complicated processing, but merely by testing if the magnetic field, or the absolute value thereof, is larger than a predefined threshold value and/or by testing if there is a change of the sign of the value (e.g. from a positive to a negative value, or vice versa, from a positive to a negative value) by using the zero value as a threshold.

According to a fourth aspect, the present invention also provides a sensor module comprising: a magnetic source (e.g. a ring magnet) having a central axis and at least one through-opening; at least one magnetic sensor (e.g. embedded in, or mounted to a semiconductor die) located inside said through-opening; wherein the at least one magnetic sensor is embedded in a semiconductor substrate which is fixedly and unmovably connected (e.g. directly or indirectly) to the magnetic source; a processing circuit (e.g. implemented on the same semiconductor die, or on a second semiconductor die) configured for providing a signal that is indicative of a presence or a position or an orientation of an object (or "target"), external to the sensor module when present in the vicinity of the magnet, or a signal derived from said position or orientation (such as a speed, a velocity or an acceleration), based on at least one signal provided by the at least one magnetic sensor, optionally using a look-up table.

The processing circuit may comprise a non-volatile memory comprising data or parameters (e.g. a look-up table, or coefficients of a polynomial, or the like) for converting the sensor signal obtained from the at least one magnetic sensor into a position of the object. The data or parameters may be determined by simulation or by a calibration procedure.

The magnetic source and the semiconductor die may be encapsulated in a plastic housing (e.g. as illustrated by the dotted lines in FIG. 1A to FIG. 1E).

The external object (or "target") may comprise a magnetic or a soft-magnetic or a hard-magnetic material.

The magnetic source may be a ring magnet or a tubular magnet having a shape with a central axis and a height (H), and configured for generating a magnetic field;

The magnetic source may comprise a plurality of individual magnets spaced by a gap or an opening, or the magnetic source may have a single shape with a through-opening.

In some embodiments, the magnetic sensor is located completely outside of the opening, and the space inside the opening may be filled with a non-magnetic material, such as e.g. air or gas, e.g. an inert gas, a plastic material, e.g. a resin, Aluminum, etc.

The magnetic source may be a radially magnetized ring magnet.

The at least one sensor element may be configured for measuring a magnetic field component (Bz) oriented in an axial direction of the magnet.

According to a fifth aspect, the present invention is also directed to a sensor assembly for determining a presence and/or a linear position of an object that is movable towards and away from the sensor assembly, the sensor assembly comprising: a magnetic source having a central axis and a through-opening; at least one or only one magnetic sensor element; a processing circuit; wherein the at least one magnetic sensor element is configured for providing at least one sensor signal; and wherein the processing circuit is configured for providing a signal that is indicative of a presence and/or a linear position of an object external to the sensor device when present in the vicinity of the magnet, or a signal derived from said position (e.g. a linear speed), based on said at least one sensor signal.

According to a sixth aspect, the present invention is also directed to a sensor assembly for determining a presence and/or a linear position of an object that is movable towards and away from the sensor assembly, the sensor assembly comprising: a printed circuit board; a magnetic source (e.g. fixedly and unmovably) mounted to a first side of the printed circuit board, the magnetic source having a central axis and a through-opening; a semiconductor substrate comprising at least one or only one magnetic sensor element and a processing circuit; wherein the at least one magnetic sensor element is configured for providing at least one sensor signal; and wherein the processing circuit is configured for providing a signal that is indicative of a presence and/or a linear position of an object external to the sensor device when present in the vicinity of the magnet, or a signal derived from said position (e.g. a linear speed), based on said at least one sensor signal.

In an embodiment, the semiconductor substrate is also situated on the first side of the printed circuit board (PCB), inside the through-opening. The semiconductor substrate may be directly mounted to the PCB. Alternatively, the semiconductor substrate may be encapsulated in a packaged semiconductor device (known as "chip"), which is soldered to the PCB.

In an embodiment, the semiconductor substrate is situated on a second side of the printed circuit board, opposite the first side, in the vicinity of the through-opening. The sensor element may be located on the central axis of the magnet.

In an embodiment, the semiconductor substrates has only one magnetic sensor element, configured for measuring a magnetic field component (Bz) oriented parallel to the central axis of the ring magnet.

In an embodiment, the magnet is radially magnetized. In another embodiment, the magnet is axially magnetized.

These and other aspects of the invention will be apparent from and elucidated with reference to the embodiment(s) described hereinafter.

### Brief description of the drawings

**FIG. 1A** shows an illustrative example of a position sensor system (e.g. proximity sensor system) proposed by the present invention, in side view. This sensor system comprises a ring magnet fixedly connected to a magnetic sensor device (e.g. via an intermediate PCB). The system further comprises a movable object. The ring magnet is located between the sensor device and the movable object. It can also be said that the sensor system of FIG. 1A comprises a sensor module and a movable object.
**FIG. 1B to FIG. 1E** show a few variants of the sensor module of FIG. 1A, each Figure showing a side view and a top view.
**FIG. 2(a) to FIG. 2(c)** illustrate the system of FIG. 1A for three different positions of the movable object.
**FIG. 3** shows an illustrative example of a sensor signal measured by the sensor device of the sensor system of FIG. 2(a) to FIG. 2(c).

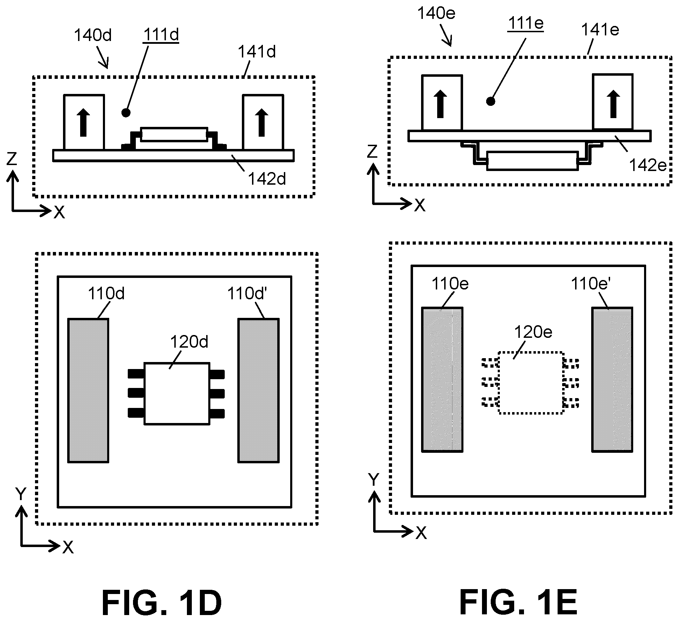

**FIG. 4A** shows a cross-sectional view of an axially magnetized ring magnet (like the one of FIG. 1), and a plurality of magnetic flux lines generated by the ring magnet, when the movable object is absent or far away from the magnet, in a plane containing the central axis of the ring magnet. Also shown is a first location A and a second location B on the central axis where Bz=0.
**FIG. 4B** gives a qualitative impression of the value of Bz (magnetic field component oriented in the Z-direction) measured at various points along the central axis of FIG. 4A (in the absence of the movable object). It can be appreciated that the shape and/or the position of this curve will vary when the movable object approaches the magnet.
**FIG. 5A** shows a cross-sectional view of a radially magnetized ring magnet, as may be used in the system of FIG. 1A, and shows a plurality of magnetic flux lines generated by the ring magnet, when the movable object is absent or far away from the magnet, in a plane containing the central axis of the ring magnet. Also shown is a first location A on the central axis where Bz=0.
**FIG. 5B** gives a qualitative impression of the value of Bz (magnetic field component oriented in the Z-direction) measured at various points along the central axis of FIG. 5A (in the absence of the movable object). It can be appreciated that the shape and/or the position of this curve will vary when the movable object approaches the magnet.

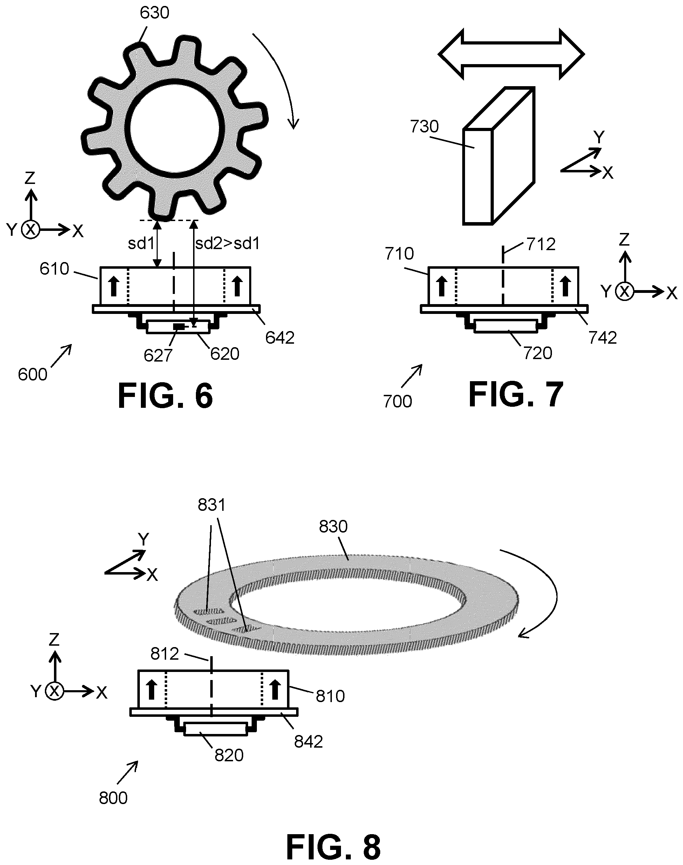

**FIG. 6** shows a variant of FIG. 1A, wherein the movable object is a gear wheel that can rotate about an axis parallel to the Y-axis, and having a plurality of teeth. The sensor device may be configured to determine a position of the closest tooth, and/or to determine a speed of rotation, and/or to count how many teeth have passed over the magnet.
**FIG. 7** shows a variant of FIG. 1A, wherein the movable object is an object that can move in a lateral direction (e.g. in the XY-plane) or in a radial direction with respect to the magnet.
**FIG. 8** shows a variant of FIG. 1A, wherein the movable object is a circular object, e.g. a ring or a disk situated mainly in the XY-plane, and having a plurality of protrusions and/or cavities and/or through-openings.
**FIG. 9 to FIG. 15** show various illustrative examples of sensor systems, each comprising: a movable object (not shown) comprising a magnetic or a ferromagnetic material, a magnetic source, and a semiconductor die comprising one or more magnetic sensors, arranged at predefined positions relative to the magnetic source. The systems of FIG. 9 to FIG. 15 comprise a ring magnet, but only half of the ring is shown for illustrative purposes.

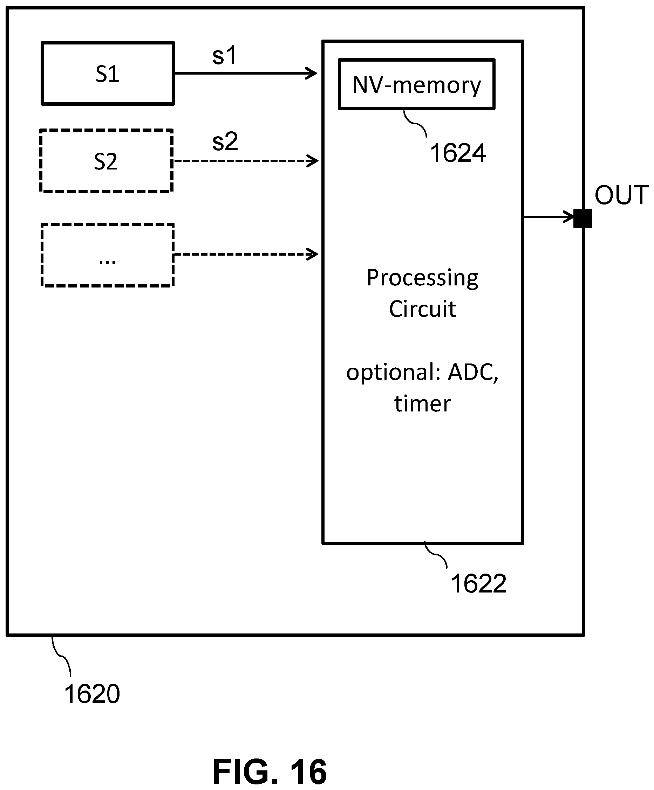

**FIG. 16** shows a high-level block-diagram of a sensor device as may be used in embodiments of the present invention, e.g. in the sensor modules or sensor systems illustrated in FIG. 1A to FIG. 1E, FIG. 2A to FIG. 2C, FIG. 6 to FIG. 15, FIG. 18 or FIG. 19.

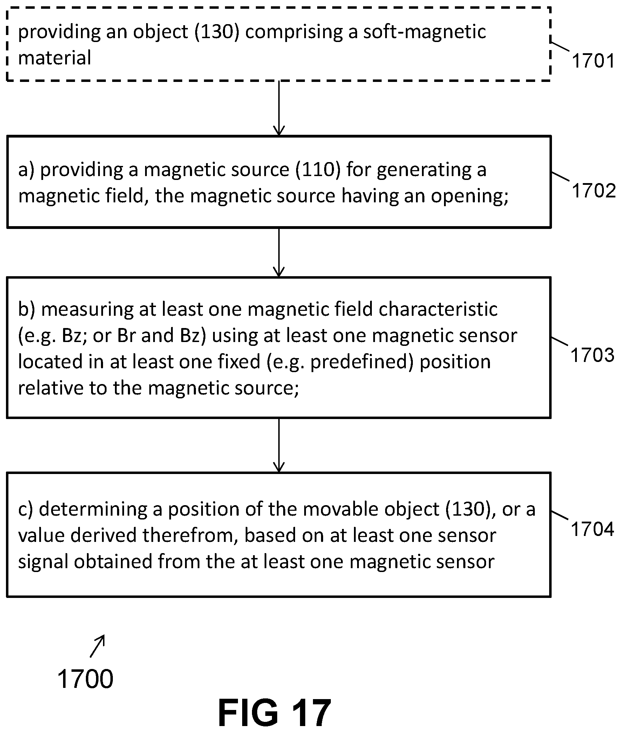

**FIG. 17** shows a flow-chart of a method of determining a position of a movable object, according to an embodiment of the present invention.

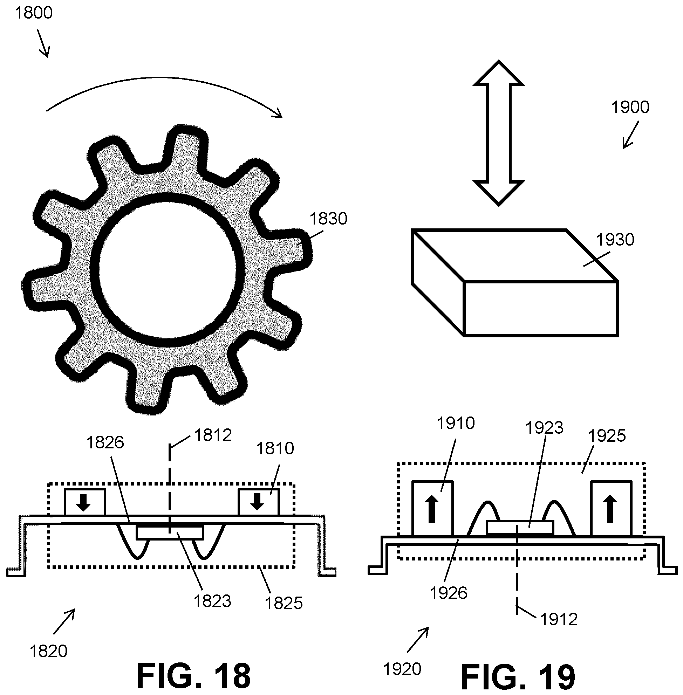

**FIG. 18** and **FIG. 19** show examples of position sensor devices, modules and systems according to embodiments of the present invention, wherein the magnetic sensor and the magnetic source are integrated in a packaged chip.

The drawings are only schematic and are non-limiting. In the drawings, the size of some of the elements may be exaggerated and not drawn on scale for illustrative purposes. This is especially true for FIG. 18 and FIG. 19.

Any reference signs in the claims shall not be construed as limiting the scope. In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The same or similar reference numerals (modulo 100) may be used to indicate same or similar structural features in different embodiments.

In this document, IMC stands for "integrated magnetic concentrator" or "integrated magnetic flux concentrator".

In this document, PCB stands for "printed circuit board".

In this document, MR element stands for "magneto-resistive element".

In this document, the term "magnetic sensor element" may refer to a horizontal Hall element, a vertical Hall element, a magneto resistive element (e.g. GMR, AMR, XMR, TMR), etc.

in this document, the term "magnetic sensor" or "magnetic sensor structure" refers to a structure or arrangement comprising one or more magnetic sensor elements, and optionally an IMC. A magnetic sensor may function as a 1D (one-dimensional) magnetic pixel, or as a 2D (two-dimensional) magnetic pixel, or as a 3D (three-dimensional) magnetic pixel.

In this document, the expression "2D magnetic pixel" means a magnetic sensor that can measure two orthogonal magnetic field components in a very small volume, e.g. at a single sensor location, or at two sensor locations that substantially coincide, e.g. spaced apart by a distance smaller than 100 micron, or smaller than 80 micron, or smaller than 60 micron.

In this document, unless explicitly mentioned otherwise, the term "magnetic sensor device" refers to a semiconductor device, e.g. a semiconductor die, packaged or unpackaged, comprising at least one "magnetic sensor structure". The sensor device may be comprised in a package (e.g. plastic or ceramic package), also called "chip", although that is not absolutely required. The sensor device preferably contains a semiconductor substrate.

In this document, the expression "in-plane component of a magnetic field vector" and "projection of the magnetic field vector in the sensor plane" mean the same. If the sensor device is or comprises a substrate, this also means "magnetic field component parallel to the substrate".

In this document, the expression "out-of-plane component of a vector" and "Z component of the vector" and "projection of the vector on an axis perpendicular to the sensor plane" mean the same.

In this document, the expression an "on-axis position" or "axial position" means a position on the central axis of the magnetic source, and an "off-axis position" means a position at a non-zero distance from the central axis of the magnetic source.

In this document, the expression "the movable object is absent" or "the movable object is located far from the magnetic source " means that the movable object is at a position sufficiently far from the magnetic source such that its influence on the magnetic field is not measurable by the magnetic sensor, or is at most 1 Least Significant Bit after amplification and digitization of the sensor signal(s).

Embodiments of the present invention are typically described using an orthogonal coordinate system which is fixed to the magnetic source, e.g. a ring magnet, and having three axes X, Y, Z, where the Z-axis coincides with the central axis of the ring, and the X and Y axis define a plane perpendicular to the Z-axis.

The present invention relates to magnetic sensors, and more in particular to a system, a module, and a method of determining a position, or an orientation, or a value derived from such position or orientation (e.g. a linear speed, an angular speed, a distance, an acceleration, and the like) of an object that is movable relative to a magnetic source, and relatively to a magnetic sensor device that has a fixed position relative to the magnetic source, and may e.g. be fixedly mounted to the magnetic source (e.g. using a PCB). The movable object comprises a material (e.g. a soft-magnetic material) capable of influencing the flux lines of the magnetic field generated by the magnetic source.

Systems comprising a magnet for generating a magnetic field, and a movable object for influencing the magnetic field, and a sensor device for measuring the influenced magnetic field are known in the art, but in known systems, the sensor device is usually arranged between the magnet and the movable object.

The inventors of the present invention surprisingly found that it is possible to arrange the magnetic source between the movable object and the sensor device, e.g. as illustrated by the illustrative example of FIG. 1A, or to arrange the sensor device "further than" or "behind" the magnetic source (as seen from the movable object), or even "inside" the magnetic source (e.g. if it has a hollow space or an opening) or between different parts of the magnetic source (e.g. if the magnetic source consists of multiple individual magnets spaced apart from each other), and still be able to reliably detect movements of the object. They furthermore discovered that certain magnetic sources are particularly well suited for such systems, and that the position (or speed etc.) can be detected even with a simple magnetic sensor configuration, and/or using only simple arithmetic. These are some of the underlying ideas of the present invention.

It is pointed out, however, that many variants are possible, e.g. using one or more of the following variations:
i) the movable object may have various shapes, e.g. a planar plate (see e.g. FIG. 1A), or a gear wheel with multiple teeth (see e.g. FIG. 6 or FIG. 18), or a ring with a plurality of protrusions or cavities or through-openings (see e.g. FIG. 8), or a solid piece of material (see e.g. FIG. 19);
ii) the movable object may be configured to move in various ways, e.g. to move towards/away from the magnetic source (see e.g. FIG. 1A or FIG. 19), to move in a lateral direction (see e.g. FIG. 7), to rotate (see e.g. FIG. 6, FIG. 8, FIG. 18);
iii) the magnetic source may be a single ring magnet, e.g. having a circular cross-section (see e.g. FIG. 1B), or may be tubular magnet (e.g. with a square or rectangular cross section, not shown), or may comprise multiple discrete ring segments spaced apart from each other (see e.g. FIG. 1C), or may comprise multiple bar magnets spaced apart from each other (see e.g. FIG. 1D and FIG. 1E), etc.
iv) the magnetic source may be axially magnetized (see e.g. FIG. 4A), or radially magnetized (see e.g. FIG. 5A);
v) The magnetic source may have a rotation symmetrical shape, but that is not absolutely required.
vi) the sensor device may comprise a semiconductor substrate, e.g. a semiconductor die, comprising at least one magnetic sensor element, e.g. one 1D magnetic pixel (see e.g. FIG. 9 to FIG. 11), or one 2D magnetic pixel (see e.g. FIG. 13, FIG. 14), or two 1D magnetic pixels (see e.g. FIG. 12), or two 2D magnetic pixels (see e.g. FIG. 15).
vii) The semiconductor substrate may further comprise a biasing and readout circuit, and optionally also a digitizing circuit, and optionally also a digital processing circuit;
viii) the semiconductor substrate may be oriented parallel to a central axis of the magnetic source (see e.g. FIG. 1A, FIG. 6 to FIG. 9, FIG. 11, FIG. 14, FIG. 18, FIG. 19), or perpendicular to a central axis of the magnetic source (see e.g., FIG. 10, FIG. 12, FIG. 13, FIG. 15);
ix) the magnetic sensor element(s) may be located on the central axis of the magnetic source ("on-axis"), and may be configured for measuring one or more magnetic field components (Bz; Bz1, Bz2) oriented in the axial direction (see e.g. FIG. 9 to FIG. 12);
x) the magnetic sensor element(s) may be located at a non-zero distance from the central axis of the magnet ("off-axis"), and may be configured for measuring two orthogonal field components at a single location (see e.g. FIG. 13, FIG. 14), or at two or more different locations (see e.g. FIG. 15). These components may be oriented in a radial direction and an axial direction (Z), or may be oriented in a U and V-direction, defining a 45° and 135° angle with respect to the central axis (Z).
xi) the magnetic sensor device may be part of a semiconductor chip, and may comprise a plastic or ceramic mould compound;
xii) the magnetic sensor device may be mounted on a carrier, e.g. a printed-circuit board (PCB), which is mounted to the magnetic source, together forming a sensor module (see e.g. FIG. 1A to FIG. 1E). This sensor module may be encapsulated in a housing (e.g. an overmolded plastic).
xiii) the magnetic sensor device may be a packaged semiconductor device (also known as "chip package"), comprising: a lead frame (e.g. made of Al or Cu), and a magnetic source located on one side of the lead frame, and a semiconductor substrate located on the other side of the lead frame (see e.g. FIG. 18). The magnetic source may comprise an opening, and the semiconductor substrate may comprise at least one magnetic sensor, and an orthogonal projection of the at least one magnetic sensor onto the lead frame (in a direction perpendicular to the lead frame) falls inside an orthogonal projection of the the opening onto said lead frame. The packaged semiconductor device may further comprise a moulding compound, e.g. a plastic or ceramic moulding compound.
xiv) in a variant of xiii) the magnetic source and the semiconductor substrate are also mounted to a lead frame, but are located on a same side of the lead frame, preferably such that the semiconductor substrate is located at least partially or fully inside the opening formed or defined by the magnetic source (see e.g. FIG. 19).

Many combinations of (i) to (xiv) are possible, but for practical reasons not all combinations can be shown in pictures. Instead, the various pictures will typically focus only on certain aspects, but not on other aspects.

The invention will be explained and illustrated mainly for embodiments where the least one magnetic sensor is embedded in the semiconductor substrate for ease of explanation, but the present invention is not limited thereto, and the at least one magnetic sensor may also be mounted to the semiconductor substrate.

### Referring now to the figures.

**FIG. 1A** shows an illustrative example of a sensor system 100, proposed by the present invention, in side view. The sensor system 100 comprises a magnetic source in the form of an axially magnetized ring magnet 110, and a magnetic sensor device 120, and a "movable object" 130. The magnetic sensor device comprises at least one magnetic sensor 127. As can be seen, a smallest distance sd1 between the movable object 130 and the magnetic source 110 is smaller than a smallest distance sd2 between the movable object 130 and the at least one magnetic sensor 127. This can be written mathematically as: (sd1 < sd2), or as (sd2 > sd1).

In the example shown in FIG. 1A, the object 130 is a planar metal plate or a disk, but other shapes can also be used, see e.g. FIG. 6 to FIG. 8. The object 130 preferably comprises or consists of a soft-magnetic material for influencing the magnetic field lines generated by the magnet 110. This material may have an intrinsic coercivity less than 1000 Am⁻¹.

The magnetic sensor device 120 preferably comprises a semiconductor substrate comprising one or more magnetic sensor elements, embedded therein or connected thereto. The magnetic sensor device 120 has a fixed, predefined position and/or orientation relative to the magnetic source 110. In the example shown in FIG. 1A, the sensor device 120 is a packaged semiconductor device (also known as "chip"), which is mounted on a printed circuit board 142, which is fixedly connected to the ring magnet 110, e.g. using glue. But a packaged device is not absolutely required, and also a PCB is not absolutely required, and in a variant of FIG. 1A (not shown) the semiconductor substrate is directly mounted to the magnet 110 (e.g. using glue, or using a resin or a plastic material).

In the example of FIG. 1A, the magnetic source is an axially magnetized ring magnet 110, but that is not absolutely required, as will be explained further (see e.g. FIG. 1C to FIG. 1E, FIG. 5A). The magnetic source 110 preferably has a hollow space or an opening 111, e.g. a through opening. The opening 111 is preferably located centrally. The magnetic source 110 has a central axis 112. A Cartesian coordinate system X, Y, Z with three orthogonal axes is connected to the magnetic source, in such a way that the Z-axis is parallel to the central axis 112, and the X and Y direction define a plane perpendicular to the Z-axis. It is of course also possible to use a Polar coordinate system.

In the example shown in FIG. 1A, the ring magnet 110 is located between the sensor device 120 and the movable object 130, but that is not absolutely required, and in some embodiments, the sensor device or the semiconductor substrate is located at least partially, or even completely inside the hollow space or inside the opening defined by the magnetic source (see e.g. FIG. 1B, FIG. 1D, FIG. 10 to FIG. 13, FIG. 15, FIG. 19).

Depending on the application, the object 130 is movable towards and away from the magnetic source 110 (e.g. along the Z direction, also referred to as "axial displacement"), e.g. as illustrated in FIG. 1A. In some embodiments, the object 130 is movable in a lateral direction (see e.g. FIG. 7), e.g. parallel to the X-axis or Y-axis, also referred to herein as "transverse direction". In some embodiments, the object is movable in a "radial direction" towards and away from the central axis 112. In some embodiments, the object is rotatable (see e.g. FIG. 6, FIG. 8 and FIG. 18).

The sensor device 120 may be configured for measuring a characteristic of the magnetic field generated by the magnetic source 110, and influenced by the position and/or orientation of the movable object 130, or a value derived therefrom, such as e.g. an angular position, a linear speed, an angular speed, an acceleration, etc.

The sensor device 120 may e.g. be configured for determining a distance 101 (distance between the magnet and the object) on a linear scale, and may e.g. be configured for providing this distance as an analog or a digital value, e.g. as illustrated in FIG. 2A to FIG. 3. This signal may have at least 4, or at least 8, or at least 16, or at least 32, or at least 64 different levels, e.g. amplitude levels. **In** some embodiments, the sensor device may be further configured for comparing this distance with a predefined threshold value, and output a result of the comparison, e.g. as a binary value, e.g. as an ON/OFF-signal. This can for example be used as a "proximity sensor".

The sensor device may be configured to measure a single magnetic field component value Bz, at a predefined location relative to the magnet, e.g. at a predefined location on the central axis 112 as illustrated in FIG. 2A to FIG. 3, and FIG. 9 to FIG. 11. In other embodiments, the sensor device may be configured to measure a magnetic field component Bz1 at a first sensor location, and a value Bz2 at a second sensor location, e.g. as illustrated in FIG. 12. In other embodiments, the sensor device may comprise a 2D magnetic pixel, configured for measuring two orthogonal magnetic field components, e.g. (Br, Bz) in an "off-axis" position, e.g. as illustrated in FIG. 13 or FIG. 14. In other embodiments, the sensor device may comprise two 2D magnetic pixels, located at two "off-axis" positions, each configured for measuring two orthogonal magnetic field components, e.g. (Br1, Bz1),(Br2,Bz2) e.g. as illustrated in FIG. 15. While not shown, it is of course also possible to measure one or more magnetic field components (e.g. Bz1 only, or Br1 and Bz1) in a first, "on-axis" position, and to measure one or more magnetic field components (e.g. Bz2 only, or Br2 only, or Br2 and Bz2) in a second, "off-axis" position.

FIG. 1A also shows a "sensor module" 140a comprising: the magnet 110 and the carrier 142 (e.g. PCB) if present, and the sensor device 120. The module 140 may be encapsulated by a housing 141a, e.g. by an overmolding plastic compound.

**FIG. 1B to FIG. 1E** show a few variants of the position sensor system 100 of FIG. 1A (the movable object is not shown), and of the sensor module 140a, 141a of FIG. 1A.

**FIG. 1B** shows a sensor module 140b, optionally encapsulated 141b, where the sensor device 120b is located inside the opening 111b of the ring magnet 110b.

**FIG. 1C** shows a sensor module 140c, optionally encapsulated 141c, wherein the magnetic source comprises two circular segments 110c, 110c', spaced apart from each other. In the example of FIG. 1C, the sensor device 120c is located underneath the PCB 142c, but in a variant of FIG. 1C (not shown), the sensor device is located on the same side as the circular segments.

**FIG. 1D** shows a sensor module 140d, optionally encapsulated 141d, wherein the magnetic source comprises two bar magnets 110d, 110d', oriented in parallel and spaced apart from each other. The sensor device 120d is located between these bar magnets, on the same side of the carrier 142d, e.g. PCB.

**FIG. 1E** shows a variant of the sensor module 140d, where the sensor device 120e and the bar magnets 110e, 110e' are located on opposite sides of the carrier, e.g. PCB 142e.

The gap or open space between the individual magnetic segments may be filled or partially with one or more non-magnetic materials, e.g. glue, air, gas, a plastic, aluminum, etc.

In a further variant of FIG. 1A and FIG. 1B, the ring magnet is magnetized in a radial direction.

In a further variant of FIG. 1C, the ring segments are magnetized in a radial direction (e.g. all radially inwards, or all radially outwards), or in opposite diametric directions (e.g. along the X-axis towards or away from each other).

In another or a further variant of FIG. 1C, the magnetic source comprises more than two circular segments, for example three circular segments (e.g. each spanning an angle of 60° to 110°, spaced apart by multiples of 120°), or four circular segments (e.g. each spanning an angle of 45° to 80°, spaced apart by multiples of 90°).

In a further variant of FIG. 1D and FIG. 1E, the bar magnets are magnetized in opposite lateral directions, e.g. along the X-axis.

In another or a further variant of FIG. 1D and FIG. 1E, the magnetic source comprises more than two bar magnets, e.g. three bar magnets located on the sides of an equilateral triangle (forming angles of 120° relative to each other), or e.g. four bar magnets located on the sides of a virtual rectangle or a virtual square (forming 90° relative to each other).

**FIG. 2(a) to FIG. 2(c)** illustrate the sensor system 100 of FIG. 1A for three different positions of the movable object 130. In these embodiments, it is assumed that the sensor device 120 comprises at least one sensor element (e.g. a horizontal Hall element) located on the central axis of the ring magnet ("on-axis"), and configured for measuring a magnetic field component oriented in the (positive or negative) Z-direction.

In the example shown in FIG. 2A to FIG. 2C, the movable object 130 is movable in the Z-direction towards and away from the magnet 110, between a proximal position (FIG. 2A) with distance d2 between the magnet 110 and the object 130, and a distal position (FIG. 2C) with distance d0 between the magnet 110 and the object 130.

**FIG. 3** shows an example of a sensor signal that can be measured by the sensor device 120 of FIG. 2A to FIG. 2C, having a sensor element for measuring Bz in an "on-axis" location. These values can be obtained by performing a simulation, or by performing an actual measurement. In the example, the movable object 130 is a steel disk with a radius of 30 mm, and a thickness of about 5 mm; the magnet 110 is an axially magnetized ring magnet having a circular cross section with an inner diameter of 11 mm, an outer diameter of 21 mm, and a thickness of 5 mm. The sensor device 120 was located such that the magnetic sensor element (e.g. horizontal Hall element) is located at a distance of 2.4 mm from the bottom surface of the ring magnet 110. Three values of Bz were measured or simulated for this particular configuration:
i) about +6 mT when the object 130 is at distance d2 equal to about 1.0 mm,
ii) about 0 mT when the object 130 is at distance d1 equal to about 3.0 mm,
iii) about -6 mT when the object 130 is at distance d0 equal to about 5.0 mm.
but of course the present invention is not limited to this particular example.

The location of the sensor device in this particular sensor system was chosen such that the value of Bz changes sign when the movable object 130 moves from its distal position to its proximal position (or vice versa). This may be highly advantageous in applications where safety is important, such as e.g. in automotive, industrial or robotic applications, because it allows a certain type of error detection.

**FIG. 4A** shows a cross-sectional view of an illustrative example of an axially magnetized ring magnet (like the one of FIG. 1A), and a plurality of magnetic flux lines generated by the ring magnet in a plane containing the central axis 412 of the ring magnet, when the movable object is absent or far away from the magnet.

**FIG. 4B** gives a qualitative impression of the value of Bz (magnetic field component oriented in the Z-direction) as can be measured at various points or positions along the central axis 412, in the absence of the movable object. As can be appreciated:
- in the points A (z=zA) and B (z=zB) of FIG. 4A, the value of Bz is zero (i.e. zero Gauss);
- for locations between points A and B (z>zB and z<zA) the magnetic flux is oriented downwards, hence the value of Bz is negative, and reaches a local minimum at the centre C of the magnet (z=Zc);
- for locations higher than A (z>zA) the magnetic flux is oriented upwards, thus Bz >0;
- for locations lower than B (z<zB) the magnetic flux is also oriented upwards, thus Bz>0;
- as can also be seen, the Bz-curve reaches a local maximum at location D lower than point B (zD<zB), and at location E higher than point A (zE>zA).

The exact locations of the characteristic points A, B, C, D, E depend on the size and shape of the ring magnet, and for a particular magnet, the skilled person having the benefit of the present disclosure, can easily determine these locations, e.g. by performing a simulation, or by an actual measurement.

The experiments illustrated in FIG. 2A to FIG. 2C have shown that, as the object 130 was moved closer or further away from the magnet, the locations of the zero-crossings (z=zA, z=zB) and the locations of the local maxima (z=zD, z=zE) and the location of the local minimum (z=zC) also moved, and that the value of Bz at a predefined (fixed) sensor location changed as the object moved.

For a chosen sensor location, the relation between the positions of the object 130 and the corresponding values of Bz can be determined, e.g. by simulation, or by measurement, e.g. during a calibration procedure, and may be stored in a non-volatile memory (see e.g. FIG. 16) of the sensor device in any suitable manner, e.g. in the form of a lookup-table. During actual use of the sensor system, the value of Bz can be measured, and the corresponding location of the movable object 130 can be determined using that look-up table, optionally with interpolation.

In the example of FIG. 2A to FIG. 3, the sensor element was mounted at a predefined location slightly above point B, but a position slightly lower than point B could also be used, but preferably in the region between zD and zC.

It is noted that the invention would also work if the sensor element was mounted in the vicinity of point A, at least in theory, but the movement of the object would be severely limited or hindered if the sensor device was located above the magnet. Mounting the sensor element in the vicinity of point B offers the advantage that the sensor device 120 does not significantly hinder or limit movement of the object which is located on the opposite side of the magnet.

It will be appreciated that a magnetic source like the one shown in FIG. 1C, comprising two (or more) axially magnetic circular segments, will generate a magnetic field with field lines similar to those of FIG. 4A, especially along the central axis of the magnetic source, and in close vicinity thereof. Hence, a sensor system comprising a magnetic source like the one shown in FIG. 1C will behave quite similar as the one illustrated in FIG. 2A to FIG. 3.

It will further be appreciated that a magnetic source like the one shown in FIG. 1D and FIG. 1E, comprising two (or more) axially magnetic bar magnets, will also generate a magnetic field with field lines similar to those of FIG. 4A, especially along the central axis of the magnetic source, and in close vicinity thereof. Hence, a sensor system comprising a magnetic source like the one shown in FIG. 1D and FIG. 1E will also behave quite similar as the one illustrated in FIG. 2A to FIG. 3.

**FIG. 5A** shows a cross-sectional view of an illustrative example of a radially magnetized ring magnet (e.g. having the same shape and size as the one of FIG. 1A), and a plurality of magnetic flux lines generated by the ring magnet in a plane containing the central axis 512 of the ring magnet, when the movable object is absent or far away from the magnet.

**FIG. 5B** gives a qualitative impression of the value of Bz (magnetic field component oriented in the Z-direction) as can be measured at different points along the central axis 512, in the absence of the movable object. As can be appreciated:
- in the point F (z=zF), at the centre of the magnet, the value of Bz is zero;
- for locations higher than F (z>zF) the magnetic flux is oriented upwards, thus Bz >0;
- for locations lower than F (z<zF) the magnetic flux is oriented downwards, thus Bz<0;
- the Bz-curve reaches a local minimum at location G lower than point F (zG<zF);
- the Bz-curve reaches a local maximum at location H higher than point F (zH>zF);

The exact locations of the characteristic points F, G, H depend on the size and shape of the ring magnet, and for a particular magnet, the skilled person having the benefit of the present disclosure, can easily determine these locations, e.g. by performing a simulation, or by an actual measurement.

In a variant of FIG. 2A to FIG. 2C, a radially magnetized magnet could have been used instead of an axially magnetized magnet. In this case, as the object 130 is moved closer to or further away from the magnet, the locations of the zero-crossings (z=zF) and the locations of the local maximum (z=zH) and the location of the local minimum (z=zG) will also move, and the value of Bz at a predefined (fixed) sensor location will change as the object 130 moved.

For a fixed sensor location, the relation between the positions of the movable object 130 and the corresponding values of Bz can be determined, e.g. by simulation, or by measurement, e.g. during a calibration procedure, and may be stored in a non-volatile memory (see e.g. FIG. 16) of the sensor device in any suitable manner, e.g. in the form of a lookup-table. During actual use of the sensor system, the value of Bz can be measured, and the corresponding location of the movable object can be determined using that look-up table, optionally with interpolation.

In preferred embodiments using this type of magnet, the sensor element is preferably mounted in the vicinity of point F, e.g. slightly above point F, or slightly lower than point F, but preferably in the region between zG and zH, for the same reason as mentioned above, namely because it allows a certain type of error detection. This may be highly advantageous in applications where safety is important, such as e.g. in automotive, industrial or robotic applications.

So far, the invention was mainly explained assuming that the movable object is a flat plate or a planar disk that is movable in the Z-direction towards and away from the magnetic source, e.g. as illustrated in FIG. 1A and in FIG. 2A to FIG. 2C, but the present invention is not limited thereto, and objects having a different shape and/or performing a different movement can also be used, as long as they influence the magnetic field lines generated by the magnetic source.

**FIG. 6 to FIG. 8** show a few illustrative examples of sensor systems proposed by the present invention, comprising a movable object having a different shape, and/or capable of performing another movement than the one shown in FIG. 1A.

**FIG. 6** shows a variant of the position sensor system of FIG. 1A, wherein the movable object 630 is a gear wheel that can rotate about an axis perpendicular to the Z-axis. The gear wheel 630 has a plurality of teeth (in the example shown: 10 teeth, but of course another number of teeth is also possible). The sensor device 620 may be configured to provide a signal indicative of the position of the closest tooth, and/or to determine a speed of rotation, and/or to count how many teeth have passed over the magnet since a reference point in time, etc.

In a variant of FIG. 6, the sensor system 600 may have the gear wheel 630 in combination with another magnetic source, e.g. any of the magnetic sources described above, e.g. as illustrated in FIG. 1B to FIG. 1E, or variants thereof, e.g. having another number of discrete magnets, or having another magnetization.

As described above, the sensor device 620 may provide an analog or a digital signal with at least 4, or at least 8, or at least 16, or at least 32, or at least 64 different levels, e.g. amplitude levels. Optionally the sensor device 620 may further comprise a comparator and may provide a binary signal which has a first level (e.g. logical 1, referred to as "ON") when the signal is higher than a predefined threshold value, and has a second level (e.g. logical 0, referred to as "OFF") when the signal is lower than the predefined threshold level, or vice versa, offering an "ON"-signal when value<threshold, and offering an "OFF"-signal when value>threshold.

**FIG. 7** shows a sensor system 700 which can be regarded as a variant of FIG. 6, or as another variant of FIG. 1A, wherein the object 130 is replaced by a movable object 730 having a bar shape or a planar shape, but is oriented mainly parallel to the Z-axis, and is movable in a lateral direction (e.g. along the X-axis),or is movable in a radial direction (e.g. towards and away from the central axis 712). The sensor device 720 may be configured to provide a signal indicative of the lateral or radial position of the object, and/or of a lateral or radial speed of the object. Everything else described above for the sensor system 600 of FIG. 6, or the sensor system 100 of FIG. 1A to FIG. 1E and their variants, is also applicable here, mutatis mutandis. For example, the magnet 710 may be a radially magnetized ring magnet, or may comprise a plurality of axially or radially magnetized circle segments, or may comprise a plurality of axially or radially magnetized bar magnets, and/or the sensor device 720 may be encapsulated in a packaged device and/or may be mounted on a printed circuit board 742, and/or the module comprising the magnet 710 and the PCB 742 (if present) and the sensor device 720 may be overmolded by a housing, etc.

**FIG. 8** shows a sensor system 800 which can be regarded as another variant of FIG. 1A, or as a variant of FIG. 6, wherein the object 630 is replaced by a ring or a disk 830 mainly located in a plane XY perpendicular to the Z-axis, and having a plurality of protrusions or cavities or through-openings 831 in the vicinity of the magnet central axis 812, and is rotatable about an axis parallel to the Z-axis. The sensor device 820 may be configured to provide a signal indicative of the lateral or radial position of the openings or protrusions 831, and/or of an angular position of the object 830, and/or of an angular speed, or another value derived from the position. Everything else described above for the sensor system 600 of FIG. 6, or the sensor system 100 of FIG. 1A to FIG. 1E and their variants, is also applicable here, mutatis mutandis. For example, the magnet 810 may be a radially magnetized ring magnet, or may comprise a plurality of axially or radially magnetized circle segments, or may comprise a plurality of axially or radially magnetized bar magnets, and/or the sensor device 820 may be encapsulated in a packaged device and may be mounted on a printed circuit board 842, and/or the module comprising the magnet 810 and the PCB 842 (if present) and the sensor device 820 may be overmolded by a housing, etc.

So far, the invention has been mainly described assuming that the sensor device comprises a magnetic sensor capable of measuring a magnetic field component Bz at a sensor location located on the central axis of the magnetic source.

**FIG. 9 to FIG. 11** illustrate in more detail examples of a sensor device in the form of a semiconductor substrate comprising such a sensor element, and its position and/or orientation relative to the magnetic source. In the drawings, only a ring magnet is shown, but it shall be clear by now that a magnetic source having discrete magnets (e.g. as shown in FIG. 1C to FIG. 1E) can also be used.

In **FIG. 9****,** the sensor device is or comprises a semiconductor substrate 923 oriented perpendicular to the Z-axis, and is preferably situated lower than the bottom surface 915 of the magnet 910 (in which case its dimensions do not need to be smaller than the inner space of the magnet). The substrate 923 may comprise a magnetic sensor S9, schematically indicated by a black circle. The magnetic sensor S9 may for example be or comprise a horizontal Hall element (not explicitly shown), or may comprise an IMC disk with two or four horizontal Hall elements (not explicitly shown). The semiconductor substrate 923 may be mounted (e.g. glued) to the magnetic source (e.g. ring magnet) directly, or indirectly (e.g. via a PCB, not shown). The sensor device 923 may be configured to provide an output signal indicative of the position of the movable object (not shown in FIG. 9), e.g. derived from the measured signal Bz, e.g. in accordance with the formula: pos=f9(Bz), where "pos" is the position (e.g. axial or lateral distance) of the movable object (not shown in FIG. 9, but see e.g. FIG. 1A, FIG. 6 to FIG. 8) and f9 is a predefined function, which may be implemented as a look-up table (optionally with interpolation), or as a polynomial function using predefined coefficients, or in any other suitable way. The magnet 910 may be an axially magnetized or radially magnetized ring magnet, or may comprise a plurality of discrete magnets (e.g. as illustrated in FIG. 1C to FIG. 1E).

In a variant (not shown) of FIG. 9, the semiconductor substrate 923 has three or four 1D magnetic sensors, each capable of measuring a Bz value, the sensors being arranged on a virtual circle, equidistantly angularly spaced apart, and the values from these sensors are combined (e.g. added), and the combined value is applied to the formula f9(). The position determined by such a system is typically more accurate because the combined signal Bz has an improved SNR, and is less sensitive to mounting offset of the semiconductor substrate 923 relative to the magnetic source 910.

**FIG. 10** shows a variant of FIG. 9, wherein the semiconductor substrate 1023 is oriented parallel to the Z-axis. The semiconductor substrate 1023 may be located completely under the bottom surface 1015 of the magnet 1010 (in which case its dimensions do not need to be smaller than the inner space of the magnet), or may be situated at least partially inside the ring magnet (or inside the opening between discrete magnets). The substrate 1023 may comprise a magnetic sensor S10, schematically indicated by a black circle. The magnetic sensor S10 may for example be or comprise a vertical Hall element (not explicitly shown), or may comprising an IMC disk with two or four horizontal Hall elements (not explicitly shown), or may comprise a circuit comprising at least one magneto-resistive (MR) element, e.g. a Wheatstone bridge comprising at least two MR elements. The semiconductor substrate 1023 may be mounted (e.g. glued) to the magnetic source (e.g. ring magnet) directly, or indirectly (e.g. via a PCB, not shown). The sensor device 1023 may be configured to provide an output indicative of the position of the movable object (not shown in FIG. 10) based on the measured signal Bz, e.g. in accordance with the formula: pos=f10(Bz), where "pos" is the position (e.g. axial or lateral distance) of the movable object (not shown in FIG. 10, but see e.g. FIG. 1A, FIG. 6 to FIG. 8) and f10 is a predefined function, which may be implemented as a look-up table (optionally with interpolation), or as a polynomial function using predefined coefficients, or in any other suitable way. The magnet 1010 may be an axially magnetized or radially magnetized ring magnet, or may comprise a plurality of discrete magnets (e.g. as illustrated in FIG. 1C to FIG. 1E).

**FIG. 11** shows a variant of FIG. 9, wherein the semiconductor substrate 1123 is located completely inside the inner space (or opening) of the magnetic source 1110. This may be particularly interesting in combination with a radially magnetized ring magnet. Everything else described above for FIG. 9 is also applicable here, mutatis mutandis.

In a variant of FIG. 9 to FIG. 11, the semiconductor substrate comprises more than one horizontal Hall element situated closely together, e.g. two or three or four horizontal Hall elements spaced apart at a distance smaller than 200 micron, or smaller than 100 micron, or smaller than 70 micron, and connected in series or in parallel. Such a semiconductor substrate may be more tolerant to position offset, and may provide a signal with an improved signal-to-noise ratio (SNR).

In a variant (not shown) of FIG. 9 and FIG. 11, the semiconductor substrate comprises two horizontal Hall elements located on opposite sides of the central axis of the magnet, at approximately the same distance from the central axis, and the values from these two horizontal Hall elements are added. This offers the advantage that the SNR of the signal may be increased, and that the mounting requirements of the semiconductor substrate may be somewhat less stringent than those of FIG. 9 and FIG. 11.

**FIG. 12** shows a further variant of FIG. 10, wherein the semiconductor substrate 1223 comprises two magnetic sensors S12a and S12b, spaced apart in the Z-direction by at least 200 micron, each capable of separately measuring a value of Bz, thus sensor S12a measures Bz1 at a first axial location, and sensor S12b measures Bz2 at a second axial location which is at least 200 micron lower or higher than the first sensor location. The sensor device 1223 may be further configured for providing a position value based on the measured values Bz1 and Bz2, e.g. in accordance with the formula: pos=f12a(Bz1, Bz2), where "pos" is the position (e.g. axial or lateral distance) of the movable object (not shown in FIG. 12, but see e.g. FIG. 1A, FIG. 6 to FIG. 8) and f12a is a predefined function, which may be stored in non-volatile memory as described above. In a particular embodiment, the position is determined as a function of the ratio of the two measured Bz-values, e.g. in accordance with the formula: pos=f12b(Bz1/Bz2). This offers the advantage that the measurement is highly robust against temperature variations and against long-term effects such as demagnetization. The magnetic source may be axially or radially magnetized.

**FIG. 13** shows another variant of FIG. 10, wherein the semiconductor substrate 1323 comprises a 2D magnetic pixel S13 capable of measuring two perpendicular magnetic field components, e.g. oriented in the radial and in the axial direction Z, or capable of measuring in a first direction U (e.g. forming an angle of 45° with the Z-axis) and a second direction V, perpendicular to U. The sensor S13 is preferably located "off-axis", e.g. at a distance "dr" of at least 0.1 mm from the central axis 1312, or at least 0.2 mm. The radial distance "dr" and the axial distance "da" are predefined values. The sensor device 1323 may be further configured for providing a position value based on the measured values Br and Bz, e.g. in accordance with the formula: pos=f13a(Br,Bz) or in accordance with the formula: pos=f13b(Br/Bz).

In a variant (not shown), the semiconductor substrate comprises two 2D magnetic pixels, situated at mirrored positions relative to the centre point C of the magnet, and the two values Br1 and Br2 may be combined to form a value Br, and the two values Bz1 and Bz2 may be combined to form a value Bz, which can then be used in the formula f13a or f13b.

In another variant (not shown), the semiconductor substrate comprises two 2D magnetic pixels, situated at two positions located at the same distance "da", but on opposite sides of the central axis 1312. Again, the values Br1 and Br2 can be combined, and the values Bz1 and Bz2 can be combined.

**FIG. 14** shows a variant of FIG. 10 comprising a 2D magnetic pixel which is located "off-axis". FIG. 14 can also be seen as a variant of FIG. 13 wherein the semiconductor substrate 1423 is oriented perpendicular to the Z-axis. The sensor S14 can for example be implemented as an IMC disk with two horizontal Hall elements arranged near the periphery of the disk and spaced apart by 180°. A sum of the signals obtained from the Hall elements yields a value for Bz; a difference of the signals obtained from the Hall elements yields a value for Br. The sensor S14 can also be implemented as a horizontal Hall element (for measuring Bz) and a vertical Hall element (for measuring Br). The radial distance "dr" and the axial distance "da" are predefined values. The position of the movable element (not shown in FIG. 14, but see e.g. FIG. 1A), can be determined as a function of the measured values of Br and Bz, e.g. in accordance with the formula: pos=f14a(Br,Bz). Preferably the position is determined as a function of the ratio of Br and Bz, e.g. in accordance with the formula: pos=f14b(Br/Bz) or as pos=f14c(Bz/Br).

In a variant of FIG. 13 and FIG. 14 (not shown), the value of Br and of Bz is not measured at the same location, but is measured at two different locations, e.g. using two 1D magnetic pixels. The same formulas can be used.

**FIG. 15** shows a variant of FIG. 13, wherein the semiconductor substrate 1523 comprises at least two 2D magnetic pixels S15a, S15b, each capable of measuring two perpendicular magnetic field components, e.g. one oriented in the radial direction, and one oriented in the axial direction Z. The sensors S15a and S15b are preferably both located "off-axis". The respective axial and radial distances are predefined values. Assuming that the first 2D magnetic pixel S15a provides the values Br1 and Bz1, and that the second 2D magnetic pixel S15b provides the values Br2, Bz2, the position of the movable object (not shown) can be determined as a function of the values Br1, Br2, Bz1, Bz2, e.g. in accordance with one of the following formulas: pos=f15a(Br1, Bz1, Br2, Bz2), or pos=f15b(Br1/Br2, Bz1/Bz2), or pos=f15c(Br1/Bz1, Br2/Bz2), or pos=f15d((Br1+Br2),(Bz1+Bz2)), or pos=f15e((Br1+Br2)/(Bz1+Bz2)).

These functions may be determined during a calibration procedure or using simulations, and may be stored e.g. in a non-volatile memory of the semiconductor substrate 1523, e.g. in the form of a look-up table, as coefficients of a polynomial, or in any other suitable way.

In the example of FIG. 15, the two sensors S15a, S15b are located on the same side of the central axis, but that is not absolutely required, and it is also possible to locate the two sensors on opposite sides of the central axis (not shown). The sensors may be located at the same axial distance, or at different axial distances. The same formulas can be used.

In a particular embodiment, the two sensors are located on opposite sides of the central axis, and are located at the same axial distance. In this case, the values Br1 and Br2 can be combined to form a value Br, e.g. as a sum or an average; Likewise the values Bz1 and Bz2 can be combined to form a value Bz, e.g. as a sum or an average; and the position of the movable object can then be determined in accordance with the formula: pos=f15f(Br, Bz), or in accordance with the formula: pos=f15g(Br/Bz). The value provided by this embodiment may be less sensitive to mounting tolerances of the semiconductor substrate relative to the magnetic source.

**FIG. 16** shows a high-level block-diagram of a sensor device 1620 as may be used in embodiments of the present invention. A brief description of possible hardware is provided here for completeness.

The sensor device 1620 (e.g. position sensor device or speed sensor device) comprises at least one magnetic sensor element S1, e.g. at least one horizontal Hall element, or at least two horizontal Hall elements, or a horizontal Hall element and a vertical Hall element, or at least one magneto-resistive element (e.g. GMR, TMR, XMR, AMR).

While not explicitly shown, the sensor device 1620 typically also comprises a biasing circuit, a readout circuit, one or more amplifiers, one or more analog-to-digital convertors (ADC), etc. Such circuits are well known in the art, but are not the main focus of the present invention, and hence need not be explained in more detail here.

The position sensor device 1620 further comprises a processing circuit 1622, for example a programmable processing unit configured for receiving signals from the at least one sensor element, e.g. after amplification and digitization, and for determining a position (e.g. an axial position, a lateral position, an angular position of a gear wheel), or a value derived therefrom (e.g. number of tooth of gear wheel, linear speed, angular speed), e.g. using any of the formulas described above. The position value, or value derived therefrom (e.g. linear or angular speed) may be provided at an output of the device, e.g. in a digital or analog manner.

The position sensor device 1620 may also comprise a non-volatile memory 1624, which may comprise computer executable instructions for obtaining and processing the sensor signals. The non-volatile memory 1624 may also comprise a look-up table with values for converting for example values of Bz into a position, or for converting values of (Br/Bz) into a position, but can of course also contain other information.

The position sensor device 1620 may also comprise a timer, which can be used for example when determining a linear or angular speed of the moving object, e.g. in accordance with the formula: linear speed = (linear distance) / T, or angular speed = (angular distance) / T, where T is the time duration between a first and a second moment in time.

**FIG. 17** shows a flow-chart of a method 1700 of determining a position or a speed of a movable object (130) capable of influencing a magnetic field, e.g. an object (also referred to as "target") that comprises a soft-magnetic material (e.g. iron, silicon steel, low-carbon steel). Assuming that the object is already present, the method of determining its position comprises the steps of:
a) providing 1702 a magnetic source 110 with an opening, for generating a magnetic field;
b) measuring 1703 at least one magnetic field characteristic (e.g. Bz; Br,Bz) using at least one magnetic sensor located in at least one fixed (e.g. predefined) position relative to the magnetic source;
c) determining 1704 a position of the movable object 130, or a value derived therefrom (e.g. a linear or an angular speed, a linear or angular acceleration) based on at least one sensor signal obtained from the at least one magnetic sensor;
wherein
step b) comprises: measuring said at least one magnetic field characteristic at a location inside said opening 111, or at a location which is further from the movable object 130 than the magnetic source 110, e.g. a location beyond or behind the magnetic source (as seen from the movable object).

A speed or an average speed may be determined by determining a time derivative of the position. In this embodiment, the sensor device preferably contains a timer.

The magnetic source provided in step a) may have a single shape with a through-opening 111 (such as e.g. a ring magnet), or may comprise multiple individual magnets (e.g. circular segments or bar segments) spaced apart from each other so as to form an opening 111 or an open space between them. As mentioned above, the opening or open space may be at least partially filled with a non-magnetic material, such as e.g. air, or gas, or plastic, or aluminum, or the like.

**FIG. 18** shows a sensor system 1800 comprising a movable object 1830 and a magnetic sensor device 1820 in the form of a packaged semiconductor device (also known as "chip package"), shown in cross-section. The semiconductor device comprises: a lead frame 1826 (e.g. made of Al or Cu), and a magnetic source (e.g. a ring magnet 1810) located on one side of the lead frame (e.g. on a top side of the lead frame), and a semiconductor substrate 1823 located on the other side of the lead frame (e.g. on a bottom side of the lead frame). The magnetic source 1810 is preferably a ring magnet, with a central trough-opening. The semiconductor substrate may comprise at least one magnetic sensor (e.g. at least one horizontal Hall element). The ring magnet 1810 and the semiconductor substrate 1823 are preferably "aligned" such that an orthogonal projection of the at least one magnetic sensor onto the lead frame (in a direction perpendicular to the lead frame) falls inside an orthogonal projection of the opening onto that lead frame. The packaged semiconductor device may further comprise a moulding compound, e.g. a plastic or ceramic moulding compound. The semiconductor substrate may be connected to leads of the lead frame by means of bond wires.

The ring magnet 1810 may be axially magnetized, or radially magnetized, as described above.

The semiconductor substrate 1823 may comprise more than one magnetic sensor element, e.g. as described above (see e.g. FIG. 9, FIG. 11, FIG. 14, and the variants thereof).

In a variant, the ring magnet is replaced by a plurality of bar magnets, (e.g. as illustrated in FIG. 1C to FIG. 1E).

**FIG. 19** shows a variant of the packaged semiconductor device of FIG. 18, where the ring magnet 1910 and the semiconductor substrate 1923 are mounted on the same side of the lead frame 1926 (in the example: both on the upper side of the lead frame). The semiconductor substrate 1923 is preferably located at least partially or fully inside the opening formed or defined by the magnetic source 1910. Everything else described for FIG. 18 is also applicable here.

### REFERENCE NUMBERS (modulo 100):

- -00: sensor system
- -01: distance between movable object and the magnetic source
- -10: magnetic source
- -11: opening
- -12: central axis
- -13: circular segments
- -14: bar magnets
- -15: bottom surface of magnet
- -20: magnetic sensor device
- -21: biasing and readout circuit
- -22: processing circuit
- -23: semiconductor substrate
- -24: non-volatile memory (e.g. flash)
- -25: plastic or ceramic compound
- -26: lead frame
- -27: magnetic sensor
- -30: (movable) object, (movable) target
- -31: cavities or openings or protrusions
- -40: sensor module (incl. PCB, magnet, sensor device)
- -41: housing
- -42: PCB

- S1: first magnetic sensor
- S2: second magnetic sensor
- sd1: smallest distance between movable object and magnetic source
- sd2: smallest distance between movable object and magnetic sensor

## Claims

1. A sensor system (100; 600; 700; 800; 1800; 1900), comprising:
- a magnetic source (110) having at least one through-opening (111);
- a magnetic sensor (127) located at a fixed position relative to the magnetic source, and configured for providing a sensor signal;
- an object (130) capable of influencing a magnetic field generated by the magnetic source, the object being movable relative to the magnetic source (120) and being located completely outside of the at least one through-opening;
- a processing circuit (1622) configured for providing a signal indicative of a presence of the movable object, and/or indicative of a position of the movable object, and/or indicative of an orientation of the movable object (130), or a value derived therefrom;
- wherein a smallest distance (sd1) between the movable object (130) and the magnetic source (110) is smaller than a smallest distance (sd2) between the movable object (130) and the magnetic sensor,
or wherein the magnetic sensor (127) is situated inside said opening (111),
or wherein the magnetic source (110) is located between the magnetic sensor (127) and the movable object (130).

2. A sensor system according to claim 1,
wherein the magnetic source is mounted on a first side of a carrier (142), and the magnet sensor is mounted on a second side of the carrier (142) opposite the first side, preferably the carrier being a lead frame (1826, 1926) or a printed circuit board (142).

3. A sensor system according to any of the previous claims,
wherein the magnetic sensor element is situated at a predefined axial position (FIG. 4A: zB, zA; FIG. 5A: zF) at which the magnetic field generated by the magnetic source is substantially equal to zero in absence of the movable object and/or at a predefined spatial configuration of the movable object.

4. A sensor system according the previous claims,
wherein the processing circuit (1622) is configured to detect a change of a sign of the sensor signal provided by the magnetic sensor.

5. A sensor system according to any of the previous claims,
wherein the magnetic source is a ring magnet with a central axis, and with a circular cross section in a plane perpendicular to that central axis;
and/or wherein the magnetic source is axially magnetized or radially magnetized.

6. A sensor system according to any of the previous claims,
wherein the magnetic source has a shape with an axis (Z); and
wherein the magnetic sensor (127) is configured for measuring at least one or only one magnetic field component (Bz) oriented parallel to the axis (Z).

7. A sensor system according to any of the previous claims,
comprising a plurality of magnetic sensors configured for measuring at least two magnetic field components (Bz1, Bz2) oriented parallel to the axis, at two different locations along said axis (Z);
or comprising a plurality of magnetic sensors configured for measuring at least two magnetic field components oriented in two different directions at a single sensor location;
or comprising a plurality of magnetic sensors configured for measuring a first magnetic field component oriented in a first direction at a first sensor location, and for measuring a second magnetic field component oriented in a second direction at a second sensor location different from the first sensor location.

8. A sensor system according to any of the previous claims,
comprising a plurality of magnetic sensors configured for measuring a first radial (Br1) and a first axial component (Bz1) at a first sensor location, and optionally also for measuring a second radial (Br2) and a second axial component (Bz2) at a second sensor location, the first sensor location, and if present also the second sensor location being offset from the central axis.

9. A sensor system according to any of the previous claims,
wherein the magnetic source comprises a central axis (Z);
and one of the following alternatives:
i) wherein the magnetic sensor is mounted to, or embedded in a semiconductor substrate that is oriented perpendicular to the central axis (Z);
ii) wherein the magnetic sensor is mounted to, or embedded in a semiconductor substrate that is oriented parallel to the central axis (Z).

10. A sensor system according to any of the previous claims,
wherein the magnetic sensor is situated inside said at least one through-opening;
or wherein the magnetic sensor is situated outside of said at least one through-opening;
or wherein the magnetic sensor is embedded in a semiconductor substrate that is situated completely inside said at least one through-opening, or that is situated completely outside of said at least one through-opening, or that is situated partially inside and partially outside said at least one through-opening.

11. A sensor system according to any of the previous claims,
wherein the movable object (130) comprises, or is entirely made of a soft magnetic material;
or wherein the movable object (130) comprises, or is entirely made of a hard magnetic material;
or wherein the movable object (130) comprises, or is entirely made of a permanent magnet.

12. A sensor system according to any of the previous claims,
wherein the magnetic source has a central axis (Z); and
wherein the object is movable towards and away from the magnetic source along an axial direction (Z) of the magnetic source;
or wherein the object is movable in a lateral direction of the magnetic source;
or wherein the object is a wheel, mounted at a fixed position relative to the magnetic source, and rotatable about a rotation axis that is oriented perpendicular to the central axis (Z).

13. A method (1700) of determining a position or orientation of a movable object (130) that is capable of influencing magnetic field lines, or a value derived from said position or orientation, the method comprising the steps of:
a) providing (1702) a magnetic source (110) for generating a magnetic field, the magnetic source having at least one through-opening (111),
and arranging the magnetic source such that the movable object is located completely outside of said at least one through-opening, or arranging the magnetic source between a magnetic sensor device and the movable object;
b) measuring (1703) at least one magnetic field characteristic using at least one magnetic sensor located in at least one fixed position relative to the magnetic source;
c) determining (1704) a presence and/or a position and/or an orientation of the movable object (130), or a value derived from said position or orientation, based on at least one sensor signal obtained from the at least one magnetic sensor;
wherein step b) comprises: measuring said at least one magnetic field characteristic at a location inside said at least one through-opening (111), or at a sensor location at a distance (sd2) from the movable object (130) larger than a distance (sd1) between the movable object (130) and the magnetic source (110).

14. The method according to claim 13,
wherein step a) comprises mounting the magnetic source on a first side of a carrier (142) and mounting the magnetic sensor on a second side of the carrier (142), opposite the first side.

15. The method according to the claim 13 or 14,
wherein step b) comprises measuring at a predefined axial position **(FIG.** 4A: zB, zA; **FIG.** 5A: **zF)** at which the magnetic field generated by the magnetic source is substantially equal to zero in absence of the movable object and/or at a predefined spatial configuration of the movable object.

16. A sensor assembly (141) for determining a presence and/or a linear position of an object that is movable towards and away from the sensor assembly, the sensor assembly comprising:
- a magnetic source having a central axis (112) and a through-opening (111);
- at least one or only one magnetic sensor element;
- a processing circuit;
wherein the at least one magnetic sensor element is configured for providing at least one sensor signal;
and wherein the processing circuit is configured for providing a signal that is indicative of a presence and/or a linear position of an object (130) external to the sensor device when present in the vicinity of the magnet, or a signal derived from said position, based on said at least one sensor signal.
